# EUROPEAN PATENT APPLICATION

(11) **EP 4 440 114 A1**
(43) Date of publication of application: **02.10.2024**
(21) Application number: 22898409.2
(22) Date of filing: 10.11.2022
(51) Int. Cl.: H04N 19/85, H04N 19/597

(54) **INFORMATION PROCESSING DEVICE AND METHOD**

(30) Priority: 24.11.2021 JP 2021189829
(71) Applicant: Sony Group Corporation, Tokyo 108-0075 (JP)
(72) Inventor: HAYASHI Kao, Tokyo 108-0075 (JP); KUMA Satoru, Tokyo 108-0075 (JP); KATO Tsuyoshi, Tokyo 108-0075 (JP); YANO Koji, Tokyo 108-0075 (JP); KAWAI Wataru, Tokyo 108-0075 (JP)
(74) Representative: D Young & Co LLP
(86) International application number: PCT/JP2022/041872
(87) International publication number: WO 2023/095625

(57) **Abstract**

The present disclosure relates to an information processing device and method that can mitigate a reduction in the quality of 3D data due to encoding and decoding.

A bitstream is decoded, the bitstream having been obtained by dividing a mesh that represents an object with a three-dimensional structure into at least a first patch and a second patch, placing the first patch and the second patch within a single image, and encoding the single image. A boundary correction process is executed to correct a geometry for a boundary vertex located at a boundary of the patches decoded. The boundary vertex subjected to the boundary correction process is set as a reference point, and a smoothing process is executed to smooth a geometry for a vertex within a partial area based on the reference point. The present disclosure may be applied to, for example, an information processing device, an electronic device, an information processing method, a program, or the like.

## Description

### TECHNICAL FIELD

The present disclosure relates to an information processing device and method, and more particularly to an information processing device and method that can mitigate a reduction in the quality of 3D data due to encoding and decoding.

### BACKGROUND ART

Conventionally, a mesh has been used as 3D data that represents an object with a three-dimensional shape. As a mesh compression method, a method of extending video-based point cloud compression (VPCC) to compress a mesh has been proposed (e.g., see Non-Patent Document 1).

However, in this method, the vertex of the patch boundary may be distorted due to encoding and decoding to cause cracks (tears) in the object (3D data), leading to a deterioration in appearance. Therefore, an algorithm called "zippering" has been proposed, in which neighboring boundary vertices are searched in 3D and vertex coordinates are moved to correct the cracks (e.g., see Non-Patent Document 2).

### CITATION LIST

### NON-PATENT DOCUMENT

Non-Patent Document 1: Danillo Graziosi, Alexandre Zaghetto, Ali Tabatabai, "[VPCC] [EE2.6-related] Mesh Patch Data", ISO/IEC JTC 1/SC 29/WG 7 m 55368, October 2020
Non-Patent Document 2: Danillo Graziosi, Alexandre Zaghetto, Ali Tabatabai, "[VPCC] [EE2.6-related] Mesh Geometry Smoothing Filter", ISO/IEC JTC 1/SC 29/WG 7 m 55374, October 2020

### SUMMARY OF THE INVENTION

### PROBLEMS TO BE SOLVED BY THE INVENTION

However, correcting the position of the boundary vertex located at the patch boundary, as in this zippering, may change the positional relationship with the surrounding vertices of the boundary and reduce the quality of the 3D data.

The present disclosure has been made in view of such a situation, and aims to mitigate a reduction in the quality of 3D data due to encoding and decoding.

### SOLUTIONS TO PROBLEMS

An information processing apparatus according to one aspect of the present technology is an information processing device including: a decoding unit that decodes a bitstream obtained by dividing a mesh that represents an object with a three-dimensional structure into at least a first patch and a second patch, placing the first patch and the second patch within a single image, and encoding the single image; a boundary correction unit that executes a boundary correction process to correct a geometry for a boundary vertex located at a boundary of the patches decoded; and a smoothing unit that sets the boundary vertex subjected to the boundary correction process as a reference point and executes a smoothing process to smooth a geometry for a vertex within a partial area based on the reference point.

An information processing method according to one aspect of the present technology is an information processing method including: decoding a bitstream obtained by dividing a mesh that represents an object with a three-dimensional structure into at least a first patch and a second patch, placing the first patch and the second patch within a single image, and encoding the single image; executing a boundary correction process to correct a geometry for a boundary vertex located at a boundary of the patches decoded; and setting the boundary vertex subjected to the boundary correction process as a reference point and executing a smoothing process to smooth a geometry for a vertex within a partial area based on the reference point.

An information processing apparatus according to another aspect of the present technology is an information processing device including: a smoothing information generation unit that uses a boundary vertex subjected to a boundary correction process as a reference point to generate smoothing information including information regarding a smoothing process to smooth a geometry of a vertex within a partial area based on the reference point; and a provision unit that provides the smoothing information. The boundary vertex is a vertex located at a boundary of a patch corresponding to a part of a mesh that represents an object with a three-dimensional structure, and the boundary correction process is a process of correcting a geometry of the boundary vertex.

An information processing method according to another aspect of the present technology includes: setting a boundary vertex subjected to a boundary correction process as a reference point, and generating smoothing information including information regarding a smoothing process to smooth a geometry of a vertex within a partial area based on the reference point; and providing the smoothing information. The boundary vertex is a vertex located at a boundary of a patch corresponding to a part of a mesh that represents an object with a three-dimensional structure. The boundary correction process is an information processing method that is a process of correcting the geometry of the boundary vertex.

In an information processing device method according to one aspect of the present technology, a bitstream is decoded, the bitstream having been obtained by dividing a mesh that represents an object with a three-dimensional structure into at least a first patch and a second patch, placing the first patch and the second patch within a single image, and encoding the single image. A boundary correction process is executed to correct a geometry for a boundary vertex located at a boundary of the patches decoded. The boundary vertex subjected to the boundary correction process is set as a reference point, and a smoothing process is executed to smooth a geometry for a vertex within a partial area based on the reference point.

In an information processing device and method according to another aspect of the present technology, setting a boundary vertex subjected to a boundary correction process as a reference point, smoothing information is generated including information regarding a smoothing process to smooth a geometry of a vertex within a partial area based on the reference point. The smoothing information is then provided.

### BRIEF DESCRIPTION OF DRAWINGS

Fig. 1 is a diagram for explaining a video-based approach.
Fig. 2 is a diagram for explaining a mesh.
Fig. 3 is a diagram for explaining a difference in data configuration between a VPCC and a mesh.
Fig. 4 is a diagram for explaining zippering.
Fig. 5 is a diagram for explaining a pairing process.
Fig. 6 is a diagram for explaining application of a smoothing process.
Fig. 7 is a diagram for explaining the smoothing process.
Fig. 8 is a diagram for explaining the smoothing process.
Fig. 9 is a diagram for explaining the smoothing process.
Fig. 10 is a diagram for explaining an example of a method of specifying a correction target point and a correction utilization point.
Fig. 11 is a diagram for explaining an example of a method of specifying a correction target point and a correction utilization point.
Fig. 12 is a diagram for explaining an example of a method of specifying a correction target point and a correction utilization point.
Fig. 13 is a diagram for explaining an example of a method of specifying a correction target point and a correction utilization point.
Fig. 14 is a diagram for explaining an example of a correction method.
Fig. 15 is a diagram for explaining an example of the correction method.
Fig. 16 is a diagram for explaining an example of the correction method.
Fig. 17 is a diagram for explaining an example of the correction method.
Fig. 18 is a block diagram illustrating a main configuration example of a decoding device.
Fig. 19 is a flowchart for explaining an example of a flow of a decoding process.
Fig. 20 is a block diagram illustrating a main configuration example of the decoding device.
Fig. 21 is a flowchart for explaining an example of the flow of the decoding process.
Fig. 22 is a diagram for explaining the smoothing process for in-patch vertices.
Fig. 23 is a block diagram illustrating a main configuration example of an encoding device.
Fig. 24 is a flowchart for explaining an example of a flow of an encoding process.
Fig. 25 is a block diagram illustrating a main configuration example of the decoding device.
Fig. 26 is a flowchart for explaining an example of the flow of the decoding process.
Fig. 27 is a block diagram illustrating a main configuration example of the decoding device.
Fig. 28 is a flowchart for explaining an example of the flow of the decoding process.
Fig. 29 is a block diagram illustrating a main configuration example of the encoding device.
Fig. 30 is a flowchart for explaining an example of the flow of the encoding process.
Fig. 31 is a block diagram illustrating a main configuration example of the encoding device.
Fig. 32 is a flowchart for explaining an example of the flow of the encoding process.
Fig. 33 is a block diagram illustrating a main configuration example of the decoding device.
Fig. 34 is a flowchart for explaining an example of the flow of the decoding process.
Fig. 35 is a block diagram illustrating a main configuration example of the decoding device.
Fig. 36 is a flowchart for explaining an example of the flow of the decoding process.
Fig. 37 is a block diagram illustrating a main configuration example of a computer.

### MODE FOR CARRYING OUT THE INVENTION

Hereinafter, a mode for carrying out the present disclosure (hereinafter referred to as an embodiment) will be described. Note that the description will be given in the following order.
1. Mesh Compression in VPCC Extension
2. Smoothing Process
3. Smoothing Process Based on Geometry After Boundary Correction
4. Smoothing Process Based on Position Correction Coordinate Information
5. Smoothing Process Based on Smoothing Information
6. Appendix

### <1. Mesh Compression in VPCC Extension>

### <Documents and the like that support technical contents and technical terms>

The scope disclosed in the present technology includes, in addition to the contents disclosed in the embodiment, contents described in the following Non-Patent Documents and the like known at the time of filing, the contents of other documents referred to in the following Non-Patent Documents and the like.

Non-Patent Document 1:(As described above)
Non-Patent Document 2:(As described above)
Non-Patent Document 3: "Information technology - Coded Representation of Immersive Media - Part 5: Visual Volumetric Video-based Coding (V3C) and Video-based Point Cloud Compression (V-PCC)", ISO/IEC 23090-5:2020(E), ISO/IEC JTC 1/SC 29/WG 11 w19579
Non-Patent Document 4: Ohji Nakagami, "PCC TMC2 low complexity geometry smoothing", ISO/IEC JTC1/SC29/WG11 MPEG2018/ m43501, July 2018, Ljubljana, SI
Non-Patent Document 5: Julien Ricard, Celine Guede, Joan Llach, "[V-PCC] [NEW] Patch border filtering", ISO/IEC JTC1/SC29/WG11 MPEG2018/ m47479, 126th Meeting, March 2019, Geneva, Switzerland

That is, the contents described in the above Non-Patent Documents, the contents of the other documents referred to in the Non-Patent Documents, and the like are also basis for determining the support requirement.

### <Point Cloud>

Conventionally, there has been 3D data such as a point cloud that represents a three-dimensional structure with point position information, attribute information, and the like.

For example, in the case of a point cloud, a three-dimensional structure (an object with a three-dimensional shape) is represented as a set of large number of points. The point cloud includes position information (also referred to as geometry) and attribute information (also referred to as attribute) of each point. The attribute can include any information. For example, color information, reflectance information, normal line information, and the like of each point may be included in the attribute. As described above, the point cloud has a relatively simple data structure, and can represent any three-dimensional structure with sufficient accuracy by using a sufficiently large number of points.

### <VPCC>

Video-based point cloud compression (VPCC) is one of such point cloud encoding techniques, and encodes point cloud data, which is 3D data representing a three-dimensional structure, using a codec for two-dimensional images.

In VPCC, the geometry and the attribute of a point cloud are each decomposed into small areas (also referred to as patches), and each patch is projected onto a projection surface that is a two-dimensional plane. For example, the geometry and the attribute are projected onto any of six surfaces of a bounding box containing the object. The geometry and the attribute projected on the projection surface are also referred to as projection images. Furthermore, the patch projected on the projection surface is also referred to as a patch image.

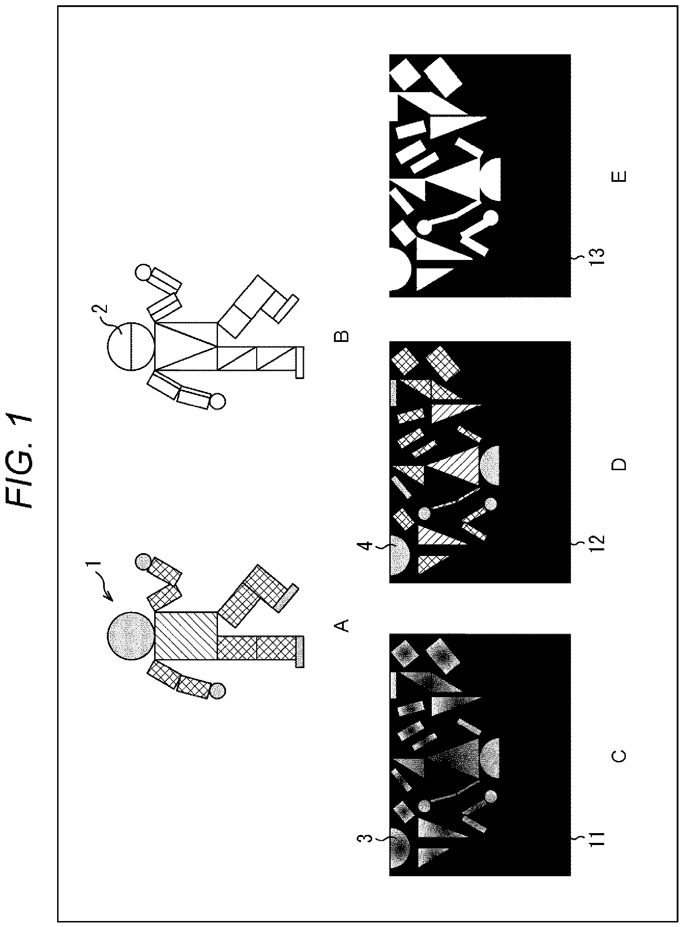

For example, the geometry of a point cloud 1, which shows an object with a three-dimensional structure illustrated in A of Fig. 1, is decomposed into patches 2 as illustrated in B of Fig. 1, and each patch is projected onto a projection surface. That is, a patch image (projection image for each patch) of the geometry is generated. Each pixel value of the patch image of the geometry indicates a distance (depth value) from the projection surface to the point.

The attribute of the point cloud 1 is also decomposed into patches 2 similarly to the geometry, and each patch is projected onto the same projection surface as the geometry. That is, a patch image of an attribute, having the same size and shape as the patch image of the geometry, is generated. Each pixel value of the patch image of the attribute indicates an attribute (color, normal line vector, reflectance, etc.) of a point at the same position of the patch image of the corresponding geometry.

Then, each patch image thus generated is placed within a frame image (also referred to as a video frame) of a video sequence. That is, each patch image on the projection surface is placed on a predetermined two-dimensional plane.

For example, the frame image in which the patch images of the geometry are placed is also referred to as a geometry video frame. Furthermore, this geometry video frame is also referred to as a geometry image, a geometry map, or the like. The geometry image 11 illustrated in C of Fig. 1 is a frame image (geometry video frame) in which the patch images 3 of the geometry are placed. The patch images 3 correspond to the patches 2 in B of Fig. 1 (the patches 2 of the geometry are projected onto the projection surface).

Furthermore, the frame image in which the patch images of the attribute are placed is also referred to as an attribute video frame. In addition, the attribute video frame is also referred to as an attribute image or an attribute map. An attribute image 12 illustrated in D of Fig. 1 is a frame image (attribute video frame) in which the patch images 4 of the attribute are placed. The patch images 4 correspond to the patches 2 in B of Fig. 1 (the patches 2 of the attribute are projected on the projection surface).

Then, these video frames are encoded by an encoding method for two-dimensional images, such as, for example, advanced video coding (AVC) or high efficiency video coding (HEVC). That is, point cloud data, which is 3D data representing a three-dimensional structure, can be encoded using a codec for two-dimensional images. Generally, compared to a 3D data encoder, a 2D data encoder is more widespread and can be implemented at lower cost. That is, by applying the video-based approach as described above, an increase in cost can be reduced.

Note that, in the case of such a video-based approach, an occupancy image (also referred to as an occupancy map) can also be used. The occupancy image is map information indicating the presence or absence of a projection image (patch image) for each NxN pixel block in the geometry video frame and the attribute video frame. For example, an occupancy image uses the value "1" to indicate an area (NxN pixel block) in the geometry or the attribute image where a patch image exists, and uses the value "0" to indicate an area (NxN pixel block) where a patch image does not exist.

Such an occupancy image is encoded as data different from the geometry image and the attribute image and transmitted to the decoding side. By referring to this occupancy map, a decoder can determine whether or not the area is an area where the patch exists, thereby enabling a reduction in the influence of noise and the like that occur due to encoding/decoding, and more accurate reconstruction of the point cloud. For example, even when a depth value changes due to encoding/decoding, by referring to the occupancy map, the decoder can ignore the depth value of the area where no patch image exists (avoid processing the depth value as the position information of the 3D data).

For example, an occupancy image 13 as illustrated in E of Fig. 1 may be generated for the geometry image 11 in C of Fig. 1 or the attribute image 12 in D of Fig. 1. In the occupancy image 13, a white portion indicates the value "1" and a black portion indicates the value "0".

Note that, similarly to the geometry video frame, the attribute video frame, and the like, this occupancy image can also be transmitted as a video frame. That is, similarly to the geometry and the attribute, encoding is performed by an encoding method for two-dimensional images, such as AVC or HEVC.

In other words, in the case of VPCC, the geometry and the attribute of the point cloud are projected onto the same projection surface and are placed at the same position in the frame image. That is, the geometry and the attribute of each point are associated with each other by the position on the frame image.

### <Mesh>

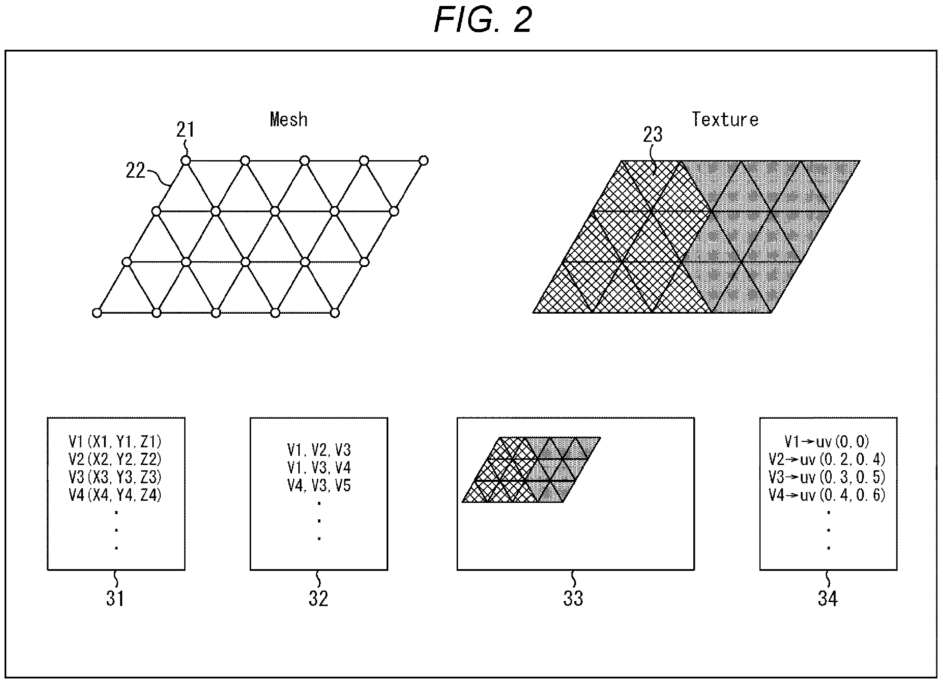

Meanwhile, for example, there has been a mesh, in addition to a point cloud, as 3D data that represents an object by a three-dimensional structure. As illustrated in Fig. 2, a mesh represents the surface of an object in three-dimensional space by a polygon that is a plane surrounded by sides 22 each connecting vertices 21. As illustrated in Fig. 2, 3D data representing the object includes the mesh and a texture 23 attached to each polygon.

For example, as illustrated in the lower row of Fig. 2, the 3D data using the mesh includes: vertex information 31 including position information (three-dimensional coordinates (X, Y, Z)) of each vertex 21; a connectivity 32 indicating the vertices 21 and the sides 22 constituting each polygon; a texture image 33 that is the map information of the texture 23 attached to each polygon; and a UV map 34 indicating the position in the texture image 33 of the texture corresponding to each vertex 21 (i.e., the position of each vertex 21 in the texture image 33). The UV map 34 indicates the position of each vertex by UV coordinates that are coordinates on the texture image 33.

In the case of 3D data using meshes, unlike the case of the VPCC described above, the correspondence between each vertex 21 and the texture 23 is indicated by the UV map 34. Thus, as in the example of Fig. 2, the texture image 33 is configured as map information independent of the vertex information 31 including the three-dimensional coordinates of each vertex. Therefore, in the texture image 33, the texture 23 of each polygon can be set to any projection direction and resolution.

### <Mesh Compression Using VPCC>

As a method of compressing 3D data using such a mesh, for example, the method of extending the VPCC described above to compress 3D data using a mesh has been proposed in Non-Patent Document 1 and the like.

However, in this method, the vertex of the patch boundary may be distorted due to encoding and decoding to cause cracks (tears) in the object (3D data), leading to a deterioration in appearance.

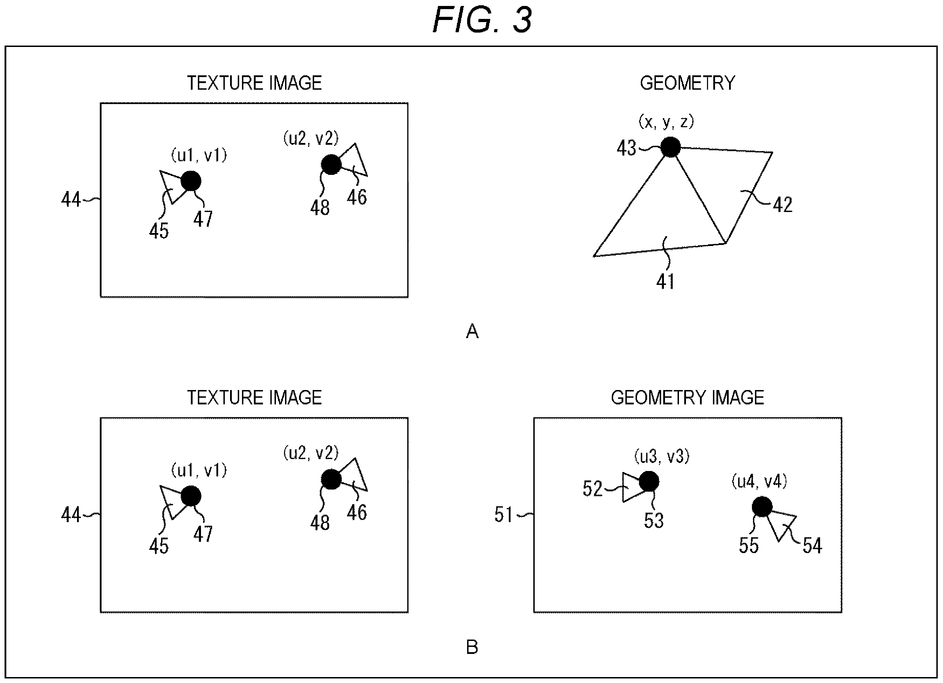

In the mesh, as illustrated in A of Fig. 3, the geometry of the vertex (the position of the vertex) is indicated as non-image as vertex information. Thus, for example, a vertex 43 shared by a polygon 41 and a polygon 42 is represented as one point. In contrast, the texture is placed in a texture image 44. That is, a texture 45 attached to the polygon 41 and a texture 46 attached to the polygon 42 are independently placed in the texture image 44. Thus, for example, as in the example illustrated in A of Fig. 3, the texture 45 and the texture 46 can be placed at positions away from each other. That is, in this case, the vertex 43 is represented as two points of a vertex 47 and a vertex 48 in the texture image 44. However, since the vertex 43 is represented as one point in the geometry as described above, the texture of the vertex 47 and the texture of the vertex 48 are attached to the vertex 43 (the same position as each other) when reconfiguring the mesh. Even if the vertex 43 is distorted due to encoding, only the position of the vertex 43 is shifted, and the texture of the vertex 47 and the texture of the vertex 48 are attached at the same position.

In contrast, in VPCC, as illustrated in B of Fig. 3, similarly to the case of the texture, a geometry is also represented as a geometry image 51. That is, when VPCC is extended to compress (encode) 3D data using a mesh, the mesh representing the object with the three-dimensional structure is divided into at least a first patch and a second patch and placed within a single image. Therefore, the polygon 41 is independently placed as a polygon 52 and the polygon 42 is independently placed as a polygon 54 in the geometry image 51. More precisely, the vertices constituting the corresponding polygons are placed in the geometry image 51 to form respective polygons. Thus, for example, as in the example illustrated in B of Fig. 3, the polygon 52 and the polygon 54 can be placed at positions separated from each other.

That is, a vertex shared by a plurality of polygons in a mesh is placed as a vertex constituting each polygon in a geometry image, and thus can be placed as a plurality of points. For example, in the case of the example of B of Fig. 3, in the geometry image 51, both the vertex 53 of the polygon 52 and the vertex 55 of the polygon 54 correspond to the vertex 43 (one vertex) in the mesh.

As described above, one vertex in the mesh can be represented as a plurality of vertices in the geometry image. Furthermore, a plurality of vertices existing at the same position in the mesh (also referred to as overlapping points) may be placed at different positions in the geometry image.

When encoding distortion occurs (positional deviation occurs) in the geometry of such vertices, each vertex of the originally single geometry becomes a vertex at a position different from each other when the mesh is reconfigured, and cracks (tears) may occur in the object (mesh). That is, the quality of the 3D data using the mesh may be reduced.

### <Zippering>

Therefore, for example, an algorithm called zippering as described in Non-Patent Document 2 has been proposed. In zippering, neighboring boundary vertices are searched in 3D, and the vertex to be processed is moved to match the searched point (also referred to as matching). The coordinates of each vertex in a cracked portion are corrected in this way to erase the crack

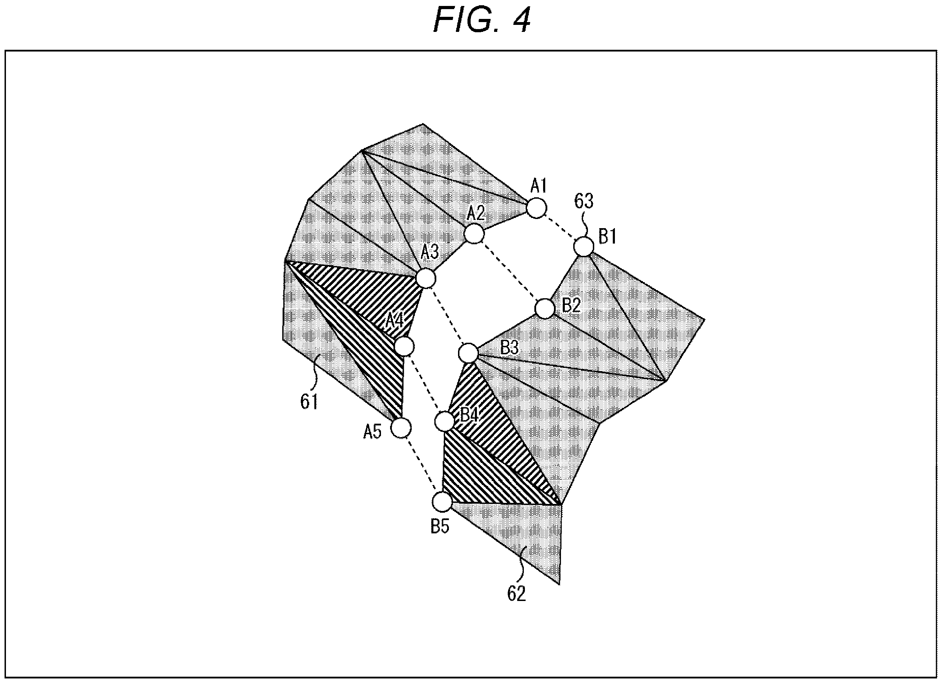

For example, as shown in Figure 4, vertices 63 (vertices indicated by the white circles in the figure) at the boundary of a patch 61 and a patch 62 are separated into two, such as A1/B1, A2/B2, and the like. These points are matched by zippering as indicated by the dotted lines in the figure to erase the cracks. A process of correcting the position of a vertex located at a patch boundary (also referred to as a boundary vertex), like this zippering, is also referred to as a boundary correction process.

### <Pairing Process>

The boundary correction process is not limited to zippering. For example, pair information regarding a combination of vertices to be matched (a pair of vertices) may be transmitted from the encoder to the decoder, and correction may be performed on the basis of the pair information to match the position of each vertex constituting the pair.

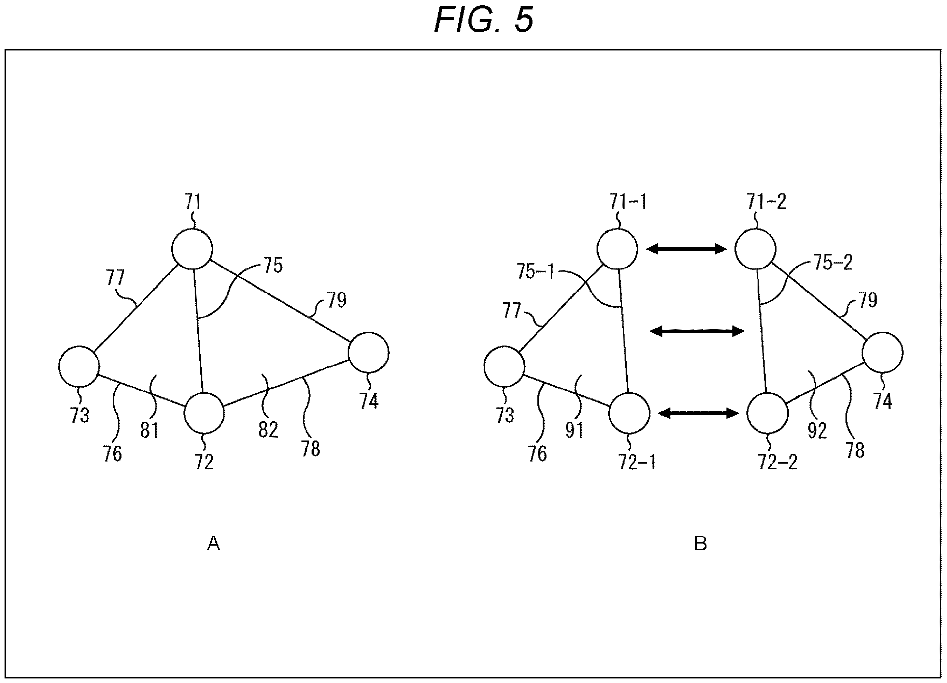

For example, as illustrated in A of Fig. 5, it is assumed that a polygon 81 having a vertex 71, a vertex 72, and a vertex 73 as vertices (enclosed by an edge 75, an edge 76, and an edge 77) and a polygon 82 having the vertex 71, the vertex 72, and a vertex 74 as vertices (enclosed by the edge 75, an edge 78, and an edge 79) are formed in a mesh. That is, the polygon 81 and the polygon 82 share the vertex 71, the vertex 72, and the edge 75.

By extending VPCC and encoding the mesh, for example, as illustrated in B of Fig. 5, it is assumed that the polygon 81 is placed as a patch 91 and the polygon 82 is placed as a patch 92 in the geometry image. Since the patch 91 and the patch 92 are placed independently of each other, these patches may be placed at positions away from each other as in the example of B of Fig. 5. That is, in the geometry image, the vertex 71 is separated into vertices 71-1, 71-2, the vertex 72 is separated into vertices 72-1, 72-2, and the edge 75 is separated into edges 75-1, 75-2.

In such a case, the encoder generates pair information that represents the vertices 71-1, 71-2, the vertices 72-1, 72-2, and the edges 75-1, 75-2 as pairs, respectively. The decoder performs matching according to the pair information. That is, the decoder corrects the positions of the vertices 71-1, 71-2 to become one vertex after reconfiguration. Similarly, the decoder also corrects the positions of the vertices 72-1, 72-2 to become one vertex after reconfiguration. With this correction, the edge 75-1 and the edge 75-2 also become one edge after reconfiguration. Therefore, the occurrence of cracks can be reduced.

Since which vertices are matched is indicated by the pair information (transmitted from the encoder), the decoder can match the vertices more reliably and accurately than in the case of zippering. That is, the cracks can be erased more reliably, and matching with a more appropriate vertex can be performed (the occurrence of discontinuity of texture can be reduced). Therefore, it is possible to mitigate a reduction in the quality of the 3D data due to encoding and decoding. In addition, since a search processing is not required, an increase in processing load can be reduced.

Note that, in the present specification, a "pair" refers to a "set" (which may also be represented as a "pair" or a "group") including a plurality of vertices of patches generated from a single vertex in a mesh. That is, each vertex constituting the pair correspond to the same vertex in the mesh. In other words, the "pair information" indicating this pair is information indicating a correspondence between vertices of a plurality of patches (which vertex corresponds to which vertex). Note that the pair may include three or more vertices. That is, one vertex in the mesh may be divided into three or more patches.

In addition, the boundary correction process based on such pair information is also referred to as a pairing process.

Note that, in the above description, an example has been described in which one vertex in a mesh is divided into a plurality of patches, but each vertex constituting a pair may correspond to an "overlapping point" in the mesh. That is, a plurality of vertices at the same position in the mesh may be divided into different patches to form a pair.

Furthermore, in the above description, a pair has been described to be constituted by vertices, but may be constituted by "edges" instead of vertices. Adjacent polygons share not only vertices but also "sides" ("connections" connecting vertices). A "set" of consecutive sides or vertices shared by a pair of patches is also referred to as an "edge". That is, the pair may indicate a "set" including a plurality of edges. In other words, the pair information may be information indicating a correspondence relationship between edges of a plurality of patches.

### <2. Smoothing Process>

### <Lowering of Image Quality Due to Boundary Correction and Application of Smoothing Process>

When the boundary correction process such as the zippering or pairing process described above is performed, only the boundary vertices of the patch are corrected (i.e., move). In other words, vertices inside the patch (also referred to as in-patch vertices) are not corrected (do not move) by the boundary correction. Hence the boundary correction may change the positional relationship between the boundary vertices and its surrounding in-patch vertices. Therefore, there has been a risk of a reduction in the subjective quality of the 3D data, such as deformation of an object with a three-dimensional structure. For example, in the displayed image, there has been a risk of a reduction in the subjective image, such as a change in the shape of the 3D object compared to the state before encoding.

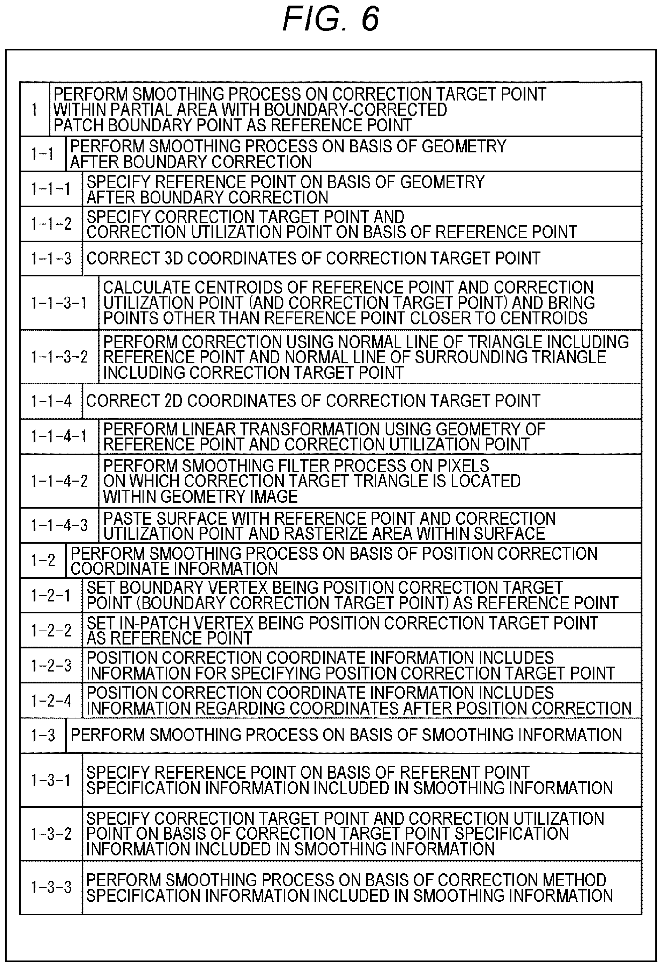

Therefore, as described above, when VPCC is extended to compress (encode) 3D data using a mesh, and boundary correction is performed after decoding, as illustrated in the top row of the table in Fig. 6, the information processing device executes the smoothing process on the correction target point within the partial area with the boundary-corrected patch boundary vertex as the reference point (method 1).

For example, then information processing device incudes: a decoding unit that decodes a bitstream obtained by dividing a mesh that represents an object with a three-dimensional structure into at least a first patch and a second patch, placing the first patch and the second patch within a single image, and encoding the single image; a boundary correction unit that executes a boundary correction process to correct a geometry for a boundary vertex located at a boundary of the patches decoded; and a smoothing unit that sets the boundary vertex subjected to the boundary correction process as a reference point and executes a smoothing process to smooth a geometry for a vertex within a partial area based on the reference point.

For example, in the information processing method, a bitstream is decoded, the bitstream having been obtained by dividing a mesh that represents an object with a three-dimensional structure into at least a first patch and a second patch, placing the first patch and the second patch within a single image, and encoding the single image. A boundary correction process is executed to correct a geometry for a boundary vertex located at a boundary of the patches decoded. The boundary vertex subjected to the boundary correction process is set as a reference point, and a smoothing process is executed to smooth a geometry for a vertex within a partial area based on the reference point.

Here, the boundary correction process is a process of correcting the geometry of the boundary vertices, such as the zippering or pairing process described above. The smoothing process is a process of correcting the positions of the vertices to reduce variations of the difference in position between the vertices, and is also referred to as the smoothing process. The decoder sets the boundary vertex subjected to the boundary correction process as a reference point, and performs the smoothing process on the vertex within the partial area specified on the basis of the reference point. Note that, since the reference point has been corrected to a more appropriate position by the boundary correction process, the position of the reference point is not corrected in the smoothing process (the reference point is not a correction target).

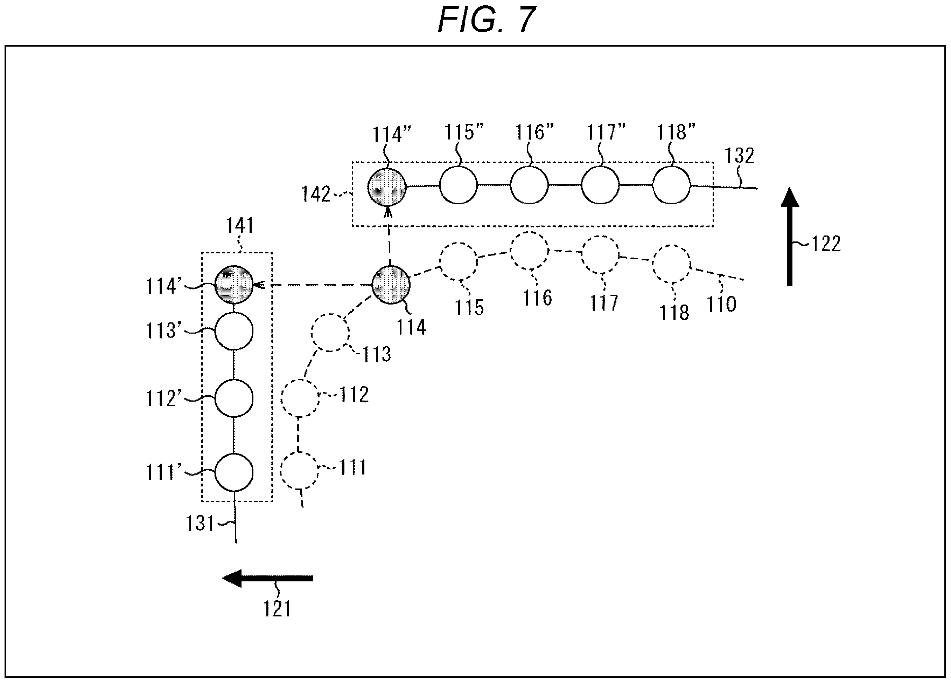

A more specific example will be described. For example, as illustrated in Fig. 7, it is assumed that vertices 111 to 118 of an object 110 are projected in two patches. For example, it is assumed that the vertices 111 to 114 are projected as a patch 141 on a projection surface 131 in the direction of an arrow 121. For example, when a depth value is lost due to encoding distortion or the like, the vertices 111 to 114 become points on the projection surface 131 like vertices 111' to 114'. Similarly, it is assumed that the vertices 114 to 118 are projected as a patch 142 on a projection surface 132 in the direction of an arrow 122. For example, when a depth value is lost due to encoding distortion or the like, the vertices 114 to 118 become points on the projection surface 132 like the vertices 114" to 118''. In such a case, in the state after reconfiguration, the vertex 114 is two vertices of the vertex 114' and the vertex 114".

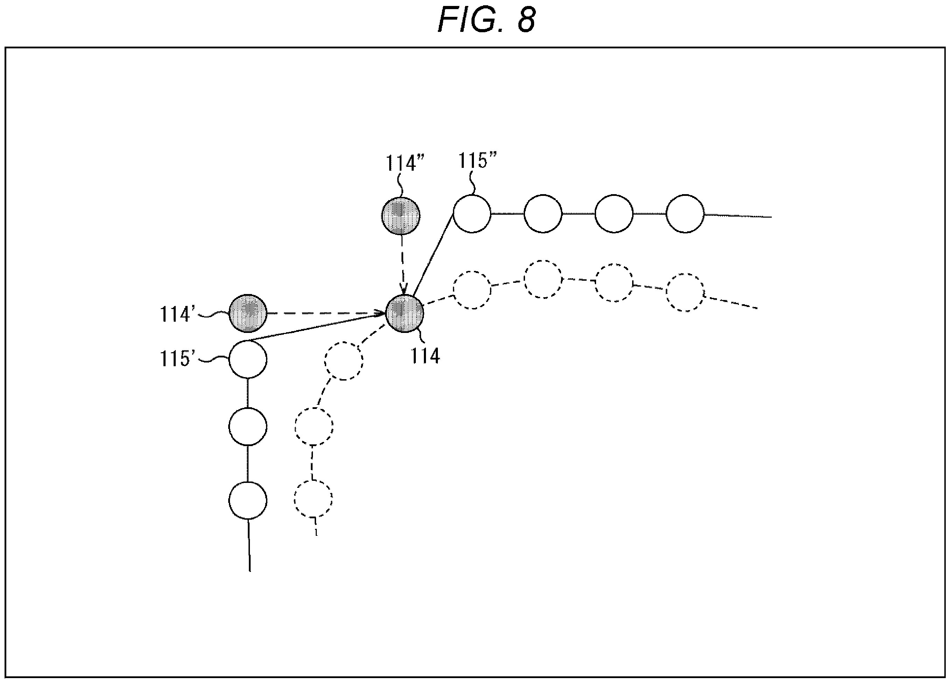

In such a case, it is assumed that the boundary correction such as the zippering or the pairing process is performed, and the positions of the vertex 114' and the vertex 114", which are the boundary vertices of the patches, are corrected to the original position of the vertex 114 as illustrated in Fig. 8. This erases cracks between the patches, but increases the difference in position between the vertex 114 (vertex 114') and the vertex 113', and between the vertex 114 (vertex 114") and the vertex 115". That is, the shape of the object after boundary correction is different from the shape of the original object 110 indicated by the dotted line.

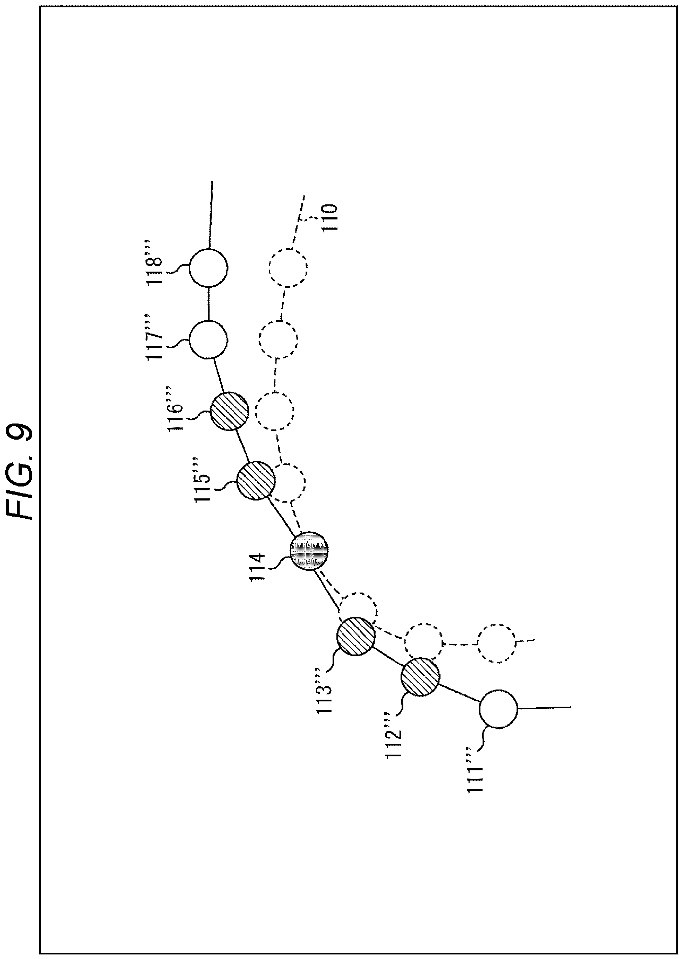

Therefore, by performing the smoothing process on the surrounding vertices of the boundary-corrected boundary vertices (the vertex 114' and the vertex 114''), it is possible to reduce the variations of the difference in position between the vertices, as illustrated in Fig. 9. In the example of Fig. 9, the vertex 112', the vertex 113', the vertex 115'', and the vertex 116'' of Fig. 7 are moved to the positions of a vertex 112‴, a vertex 113‴, a vertex 115''', and a vertex 116‴ by the smoothing process. That is, it is possible to bring the shape of the object close to the shape of the original object 110, and mitigate a reduction in the subjective quality of the 3D data.

### <3. Smoothing Process Based on Geometry After Boundary Correction>

When Method 1 described above is applied, as illustrated in the second row from the top of the table in Fig. 6, the information processing device may perform this smoothing process on the basis of the geometry after boundary correction (Method 1-1).

### <Specification of Reference Point>

When Method 1-1 is applied, as illustrated in the third row from the top of the table in Fig. 6, the information processing device may specify (set) the reference point on the basis of a geometry after boundary correction (i.e., the geometry of the boundary vertex subjected to the boundary correction process) (Method 1-1-1). Any setting method (algorithm) for the reference point based on the geometry after boundary correction may be used.

For example, a zippered boundary vertex may be used as the reference point. In addition, among the zippered boundary vertices, only the boundary vertex satisfying some condition may be used as the reference point. For example, a boundary vertex where the amount of movement by zippering is larger than a predetermined threshold may be used as the reference point. In addition, a boundary vertex having a difference in position from an adjacent vertex larger than a predetermined threshold may be used as the reference point.

Furthermore, for example, the boundary vertex subjected to the pairing process may be used as the reference point. Moreover, among the boundary vertices subjected to the pairing process, only the boundary vertex satisfying some condition may be used as the reference point. For example, a boundary vertex where the amount of movement by pairing is larger than a predetermined threshold may be used as the reference point. In addition, a boundary vertex having a difference in position from an adjacent vertex larger than a predetermined threshold may be used as the reference point.

### <Specification of Correction Target Point and correction utilization point>

Furthermore, when Method 1-1 described above is applied, as illustrated in the fourth row from the top of the table in Fig. 6, the information processing device may specify (set) a correction target point to be subjected to the smoothing process and a correction utilization point, which is used in the smoothing process, on the basis of the reference point (Method 1-1-2). Any setting method (algorithm) for the correction target point and the correction utilization point based on the reference point may be used.

For example, a triangle including the reference point and a triangle reached through a path of k (k is any natural number) edges or fewer within a patch may be set as target triangles, and an inner vertex of this group of target triangles may be set as the correction target point. Furthermore, an external vertex of the group of target triangles may be used as the correction utilization point. Note that the correction target point is a vertex other than correction target points used in the smoothing process. For example, surrounding vertices of a partial area where the correction target point exists (a partial area specified on the basis of the reference point) are set as the correction utilization points.

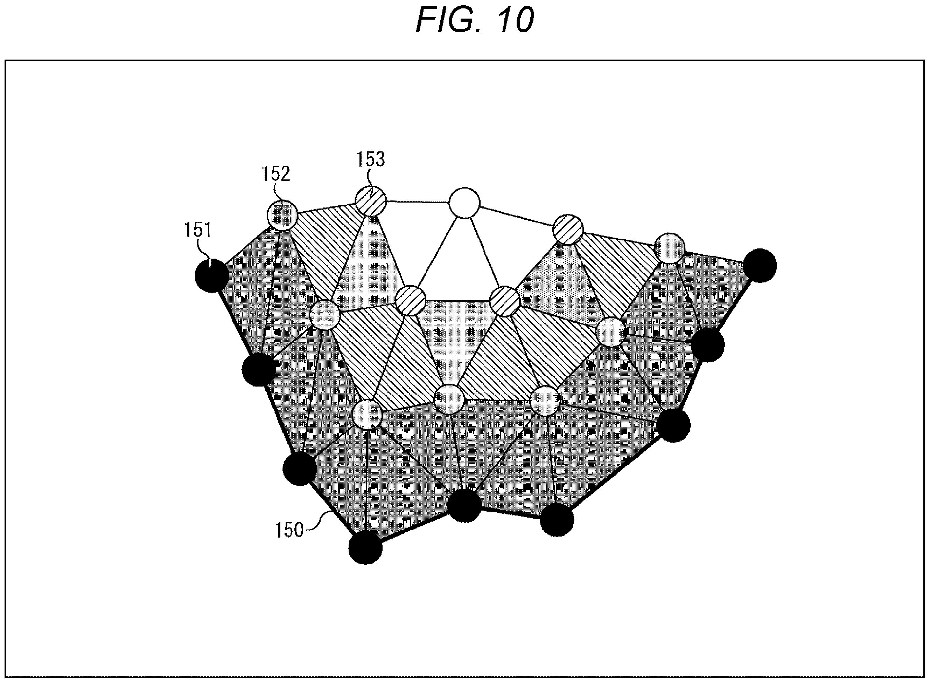

For example, in a patch 150 illustrated in Fig. 10, a vertex 151 indicated by a black circle is set as the reference point. In Fig. 10, only one of the vertices indicated by black circles is denoted by the reference sign, but all the vertices indicated by the black circles are vertices 151 and are set as the reference points. In this case, each of triangles shown in dark gray is "the triangle including the reference point". In addition, for example, when k = 2, each of triangles indicated by shaded patterns and triangles shown in light gray is "the triangle reached through a path of k edges or fewer". Therefore, these triangles are set as target triangles, and vertices 152 (internal vertices) indicated by gray circles located inside the area of the group of target triangles are set as the correction target points. In Fig. 10, only one of the vertices indicated by gray circles is denoted by the reference sign, but all the vertices indicated by the gray circles are the vertices 152 and are set as the correction target points. Furthermore, a vertex 153 indicated by a shaded circle located at the boundary of the area of the group of target triangles is set as the correction utilization point. In Fig. 10, only one of the vertices indicated by shaded circles is denoted by the reference sign, but all the vertices indicated by the shaded circles are vertices 153 and are set as correction utilization points.

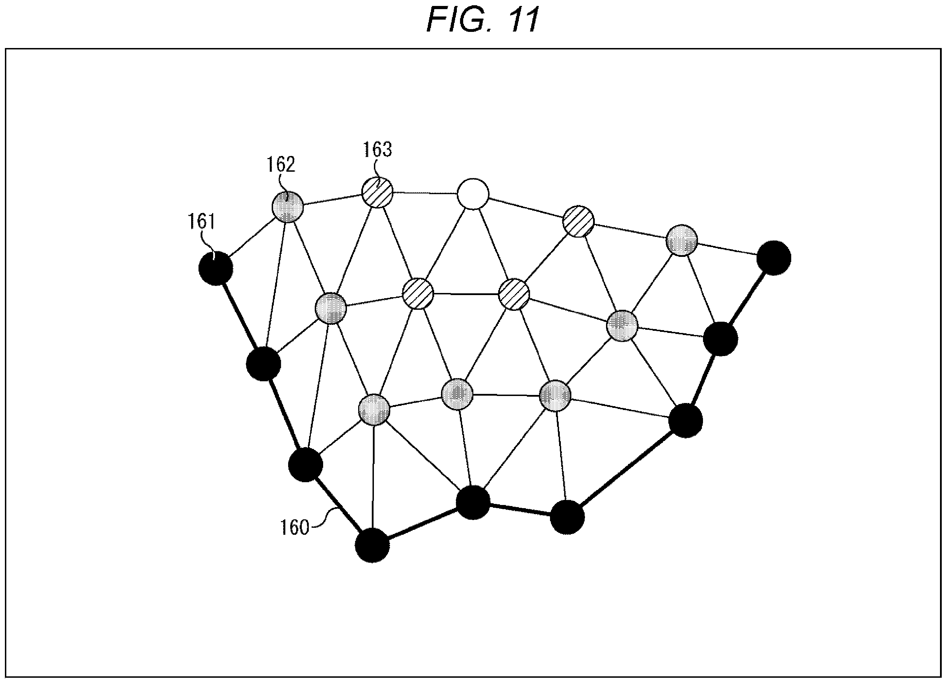

Furthermore, for example, a point connected to the reference point through a path of k (k is any natural number) edges or fewer within the patch may be set as the correction target point. In addition, a point connected to the reference point via k + 1 (or more) edges may be used as the correction utilization point. For example, in a patch 160 illustrated in Fig. 11, a vertex 161 indicated by a black circle is set as the reference point. In Fig. 11, only one of the vertices indicated by black circles is denoted by the reference sign, but all the vertices indicated by the black circle are vertices 161 and are set as the reference points. For example, when k = 1, a vertex 162 indicated by a gray circle is set as the correction target point, and a vertex 163 indicated by a shaded circle is set as the correction utilization point. In Fig. 11, only one of the vertices indicated by gray circles is denoted by the reference sign, but all the vertices indicated by the gray circles are the vertices 162 and are set as the correction target points. In addition, although only one of the vertices indicated by shaded pattern circles is denoted by the reference sign, all the vertices indicated by the shaded pattern circles are vertices 163 and are set as correction utilization points.

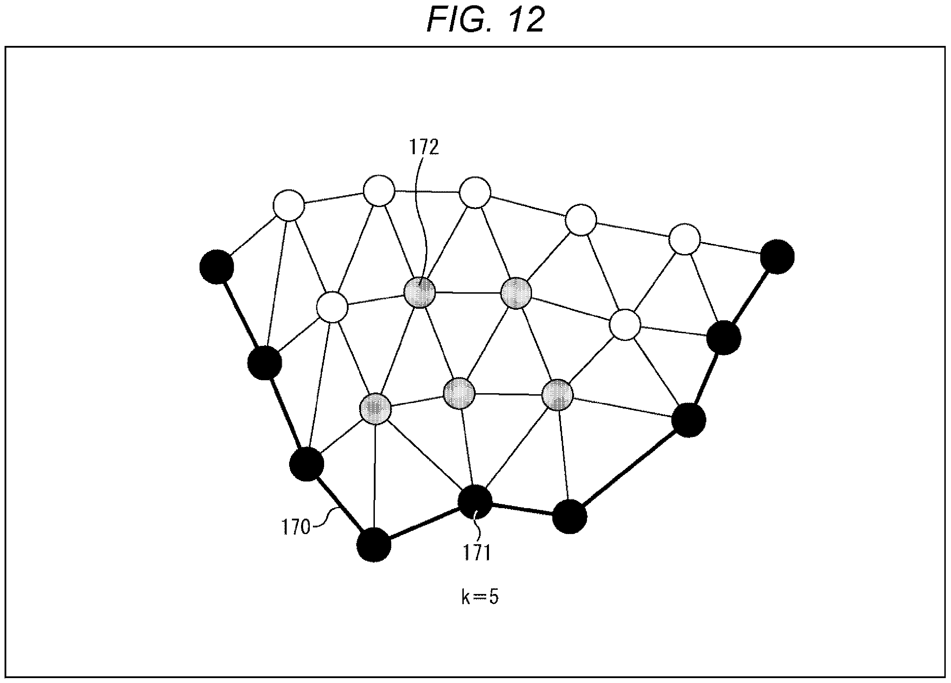

Furthermore, for example, k (k is any natural number) vertices from the side closer to the reference point within the patch may be set as the correction target points. In addition, a vertex (excluding the correction target point) connected to the correction target point by an edge may be used as the correction utilization point. For example, in a patch 170 illustrated in Fig. 12, a vertex 171 indicated by a black circle is set as the reference point. When k = 5, vertices 172 indicated by five gray circles from the closest to vertices 171 are set as the correction target points. In Fig. 12, only one of the vertices indicated by gray circles is denoted by the reference sign, but all the vertices indicated by the gray circles are the vertices 172 and are set as the correction target points. Then, a vertex (excluding the correction target point) connected to the correction target point by an edge is set as the correction utilization point.

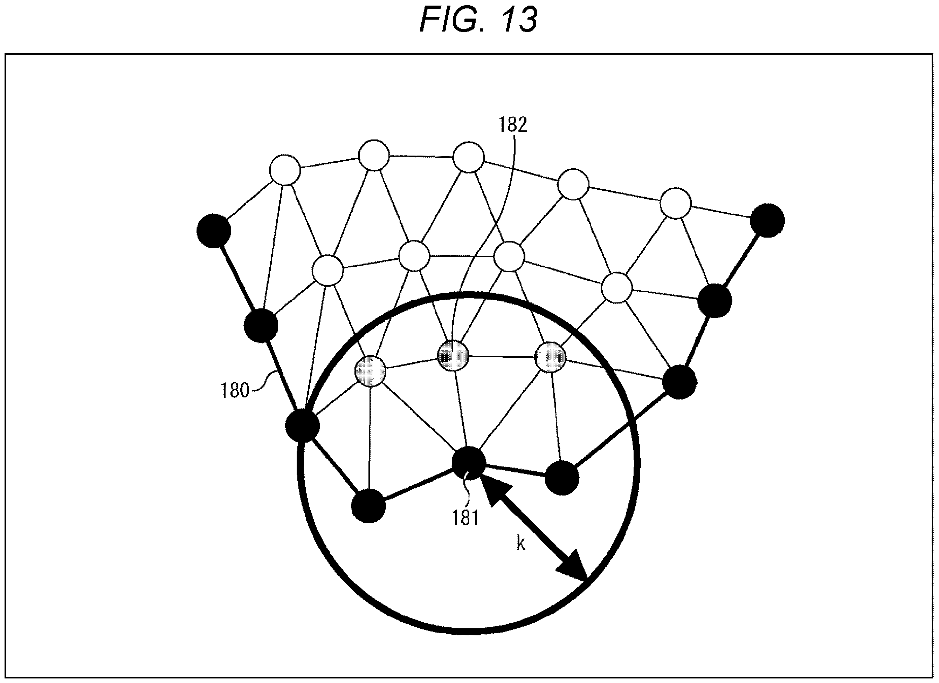

Furthermore, for example, a vertex within the patch that is a distance k (k is any positive value) or less from the reference point may be set as the correction target point. In addition, a vertex (excluding the correction target point) connected to the correction target point by an edge may be used as the correction utilization point. For example, in a patch 180 illustrated in Fig. 13, a vertex 181 indicated by a black circle is set as the reference point. A vertex 182 indicated by a gray circle located within a circle having a radius k centered on the vertex 181 is set as the correction target point. In Fig. 13, only one of the vertices indicated by gray circles is denoted by the reference sign, but all the vertices indicated by the gray circles are the vertices 182 and are set as the correction target points. Then, a vertex (excluding the correction target point) connected to the correction target point by an edge is set as the correction utilization point.

### <Correction of Correction Target Point (3D)>

Furthermore, when Method 1-1 described above is applied, as illustrated in the fifth row from the top of the table in Fig. 6, the information processing device may perform the smoothing process in three-dimensional space (Method 1-1-3). That is, the smoothing process may be performed on the correction target point in three-dimensional space after the 3D data (mesh) is reconfigured. In this case, the three-dimensional coordinates (also referred to as 3D coordinates) of the correction target point are corrected by the smoothing process. Such a smoothing process in three-dimensional space is also referred to as a 3D smoothing process.

For example, in the process (grid smoothing) described in Non-Patent Document 4, a point near a patch boundary in the 3D is brought to the center of gravity. However, in the case of this process, the correction target point (in other words, the reference point for specifying the correction target point) cannot be specified. Therefore, the position of the boundary vertex, which is the reference point, may also be corrected. In contrast, since the 3D smoothing process described above can specify the reference point (correction target point) and execute the process, it is possible to smooth the difference in position between the vertices without correcting the position of the boundary vertex corrected to a more preferable position by the boundary correction process. Therefore, it is possible to mitigate a reduction in the quality of the 3D data due to encoding and decoding.

Note that the boundary correction process is executed before the smoothing process. Thus, when the 3D smoothing process is applied, the boundary correction process may be performed in three-dimensional space or in a two-dimensional image. When the boundary correction process is performed in three-dimensional space, the boundary correction process such as zippering or the pairing process is performed on the boundary vertex in three-dimensional space after the 3D data (mesh) is reconfigured. That is, in this case, the three-dimensional coordinates (also referred to as 3D coordinates) of the boundary vertex are corrected by the boundary correction process. The boundary correction process performed in such three-dimensional space is also referred to as 3D boundary correction process. In contrast, when the boundary correction process is performed on a two-dimensional image, the boundary correction process such as the pairing process is performed on the boundary vertex in the geometry image obtained by decoding the bitstream. That is, in this case, the pixel value (depth value) of the boundary vertex in the geometry image are corrected by the boundary correction process. The boundary correction process performed in such a two-dimensional image is also referred to as 2D boundary correction process. Note that the two-dimensional image may be an xyz image used in texel-based projection or the like.

Any method (algorithm) for the 3D smoothing process may be used.

For example, when Method 1-1-3 is applied, as illustrated in the sixth row from the top of the table in Fig. 6, the information processing device may calculate the centroids of the reference point and the correction utilization point (and the correction target point) and perform correction to bring the points other than the reference point closer to the centroids (Method 1-1-3-1). When the vertices are sparse, a correction utilization point may be added. For example, the information processing device may execute the 3D smoothing process using a point subsampled from the surface as the correction utilization point. Furthermore, the information processing device may execute the 3D smoothing process using k neighboring points as the correction utilization points. In addition, a constraint may be added to prevent the surface from being turned inside out. For example, a threshold may limit a change in the normal line direction of the triangle by the correction.

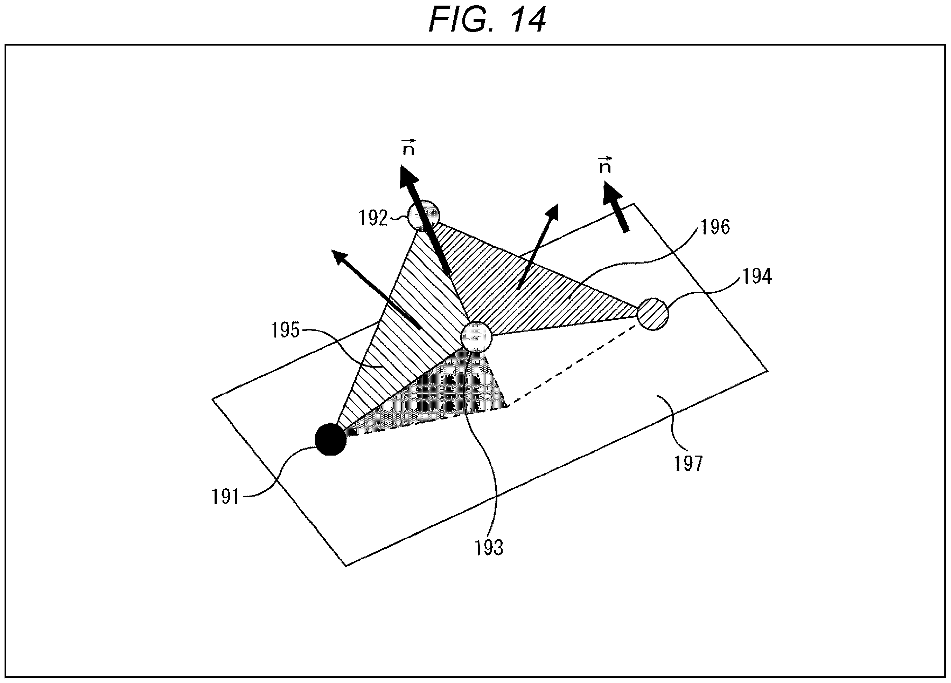

Furthermore, when Method 1-1-3 is applied, as illustrated in the seventh row from the top of the table in Fig. 6, the information processing device may perform correction using the normal line of the triangle including the reference point and the normal line of the surrounding triangle including the correction target point (Method 1-1-3-2). For example, the information processing device may calculate a (weighted) average value n in the normal line direction of each triangle, and project the triangles on a plane including the reference point and the correction utilization point and having the normal line n. For example, as illustrated in Fig. 14, the following polygons are assumed: a polygon 195 having a reference point 191, a correction target point 192, and a correction target point 193 as vertices; and a polygon 196 having the correction target point 192, the correction target point 193, and a correction utilization point 194 as vertices. In this case, the information processing device calculates the (weighted) average value n of the normal line of each of the polygons 195, 196, and corrects the positions of the correction target points 192, 193 by projecting the polygons 195, 196 onto a surface 197 including the reference point 191 and the correction utilization point 194 and having n as the normal line.

### <Correction of Correction Target Point (2D)>

Furthermore, when Method 1-1 described above is applied, the information processing device may perform the smoothing process on a two-dimensional image as illustrated in the eighth row from the top of the table in Fig. 6 (Method 1-1-4). That is, the smoothing process may be performed on the geometry image after 2D boundary correction. In this case, the pixel value (depth value) of the correction target point in the geometry image is corrected by the smoothing process. Such a smoothing process in the two-dimensional image is also referred to as a 2D smoothing process. Note that the two-dimensional image may be an xyz image used in texel-based projection or the like.

For example, in the process (patch border filtering) described in Non-Patent Document 5, a patch is projected again in a projection direction of an adjacent patch, and the number of vertices is increased or decreased for smoothing. However, in the case of this process, the number of vertices can be increased or decreased, but the coordinates thereof are not corrected. This may reduce the degree of freedom of correction. In addition, the data amount and accuracy of the 3D data may change. In contrast, since the 2D smoothing process described above corrects the position (pixel value) of the correction target point, the difference in position between the vertices can be smoothed with a higher degree of freedom. In addition, it is possible to reduce an increase in the amount of data and the change in accuracy. Therefore, it is possible to mitigate a reduction in the quality of the 3D data due to encoding and decoding.

Note that, even when the 2D smoothing process is applied, the boundary correction process is executed before the 2D smoothing process. That is, in this case, the 2D boundary correction process described above is applied.

Any method (algorithm) for the 2D smoothing process may be used.

For example, when Method 1-1-4 is applied, as illustrated in the ninth row from the top of the table in Fig. 6, the information processing device may perform linear transformation using the geometry of the reference point and the correction utilization point as the smoothing process (Method 1-1-4-1). Any method (algorithm) for the linear transformation may be used. For example, the information processing device may calculate the (distance-weighted) average of the pixel value of the reference point and the pixel value of the correction utilization point and use the average as the pixel value of the correction target point.

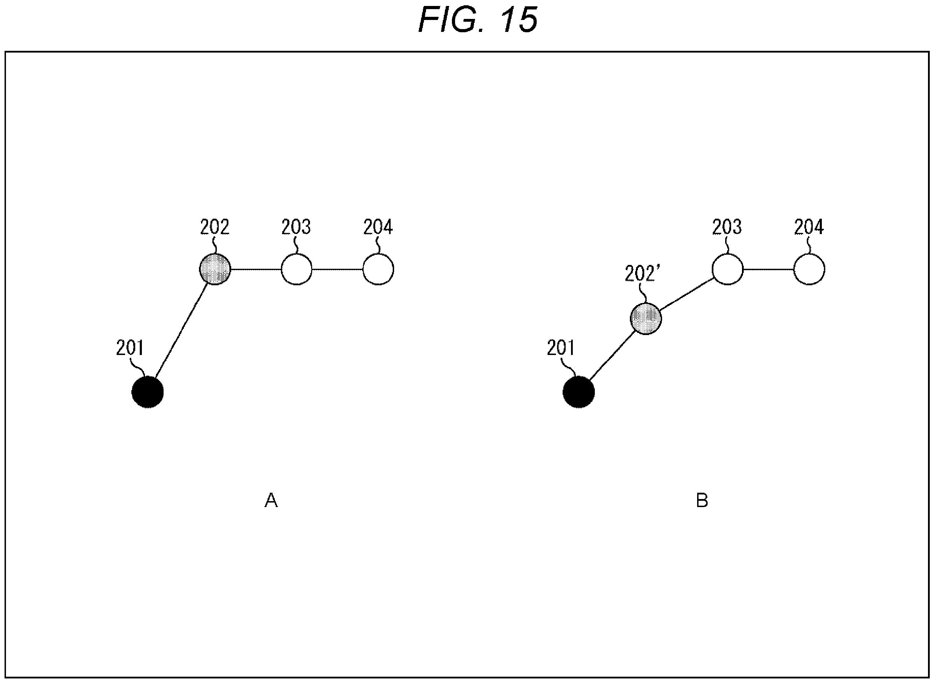

For example, it is assumed that vertices 201 to 204 exist as illustrated in A of Fig. 15, the vertex 201 is set as the reference point, the vertex 202 is set as a correction target point, and the vertices 203, 204 are set as correction utilization points. In this case, as the smoothing process, the information processing device sets the distance-weighted average of the pixel values of the vertices 201, 203, and 204 at the position of the vertex 202 as the pixel value of the vertex 202. By such correction, the vertex 202 moves to the position illustrated in B of Fig. 15, thus reducing the variations of the difference in position between each vertex.

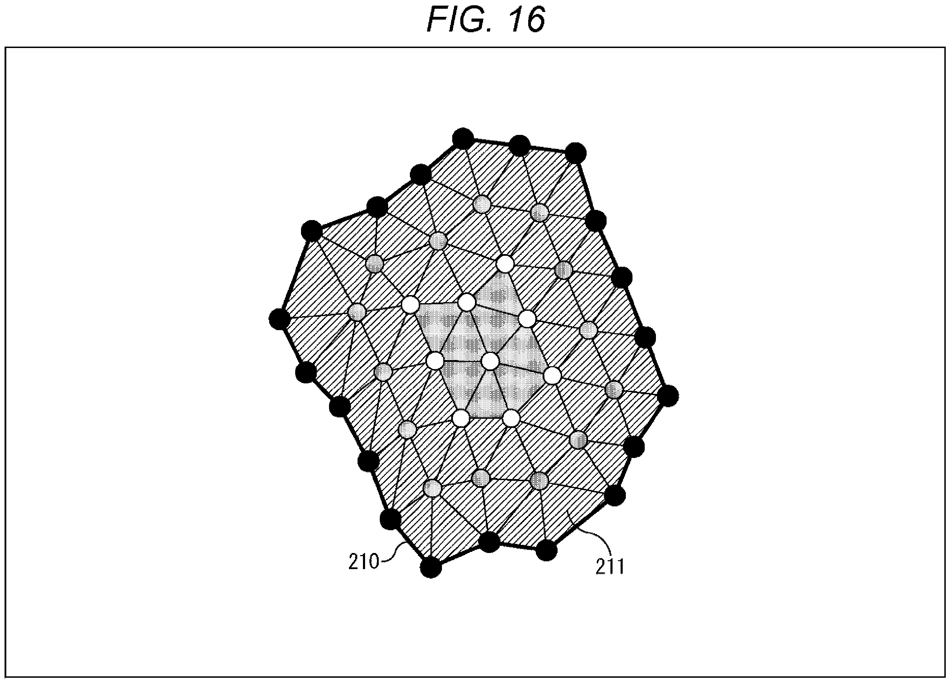

Furthermore, when Method 1-1-4 is applied, as illustrated in the tenth row from the top of the table in Fig. 6, the information processing device may perform a smoothing filter process on pixels on which the correction target triangle is located within the geometry image (Method 1-1-4-2). For example, for the patch 210 illustrated in Fig. 16, the smoothing filter process may be performed on the pixels of the partial area (the area configured by the shaded triangles) including the correction target points indicated by the gray circles.

At that time, for example, the information processing device may use only that patch to perform the smoothing filter process on the partial area within the patch. In addition, the information processing device may redefine the patch and perform the smoothing filter process on the reprojected image. In that case, for example, the information processing device may redefine the patch by reprojecting the triangles including the triangle outside the patch close to the triangle in contact with the patch boundary. Note that this reprojection may be performed by an encoder or a decoder. Furthermore, the information processing device may reproject the entire object in a plurality of predetermined directions (e.g., six directions, etc.). By performing the smoothing filter process in this way, including the area outside the patch, it may be possible to further mitigate a reduction) in the quality of the 3D data.

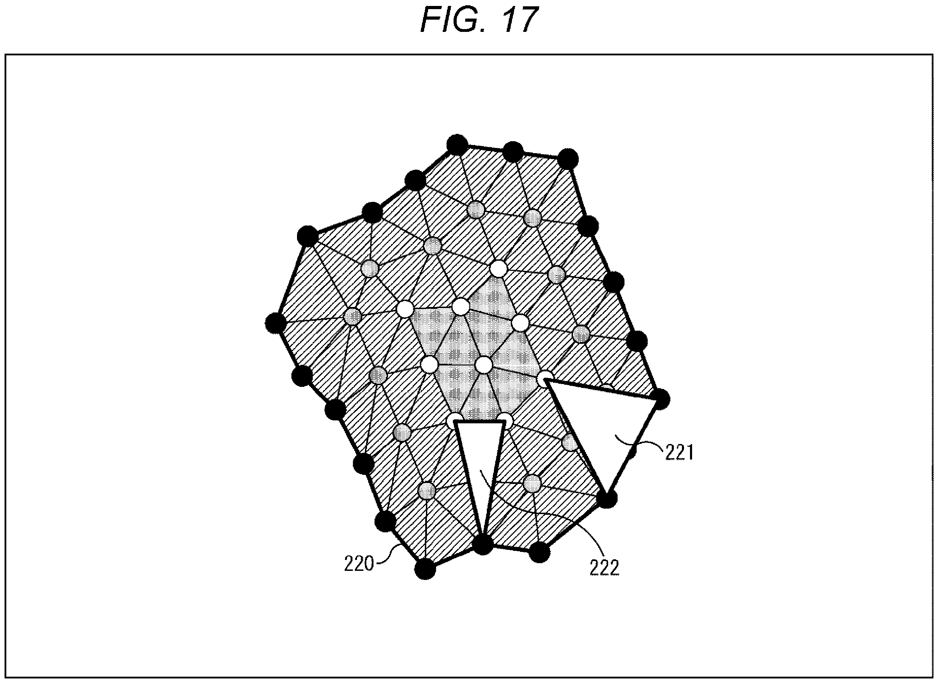

In addition, when Method 1-1-4 is applied, as illustrated in the eleventh row from the top of the table in Fig. 6, the information processing device may paste a surface (triangle) with the reference point and the correction utilization point as its vertices and rasterize the area within the surface (Method 1-1-4-3). The surface (triangle) may be, for example, a triangle having one boundary vertex and two correction utilization points in the vicinity as vertices. For example, the information processing device may paste such a surface 222 onto a patch 220 illustrated in Fig. 17 and rasterize the area within the surface 222. In addition, this surface (triangle) may be, for example, a triangle having two boundary vertices and one correction utilization point in the vicinity as vertices. For example, the information processing device may paste such a surface 221 onto the patch 220 illustrated in Fig. 17 and rasterize the area within the surface 221.

### <Decoding Device>

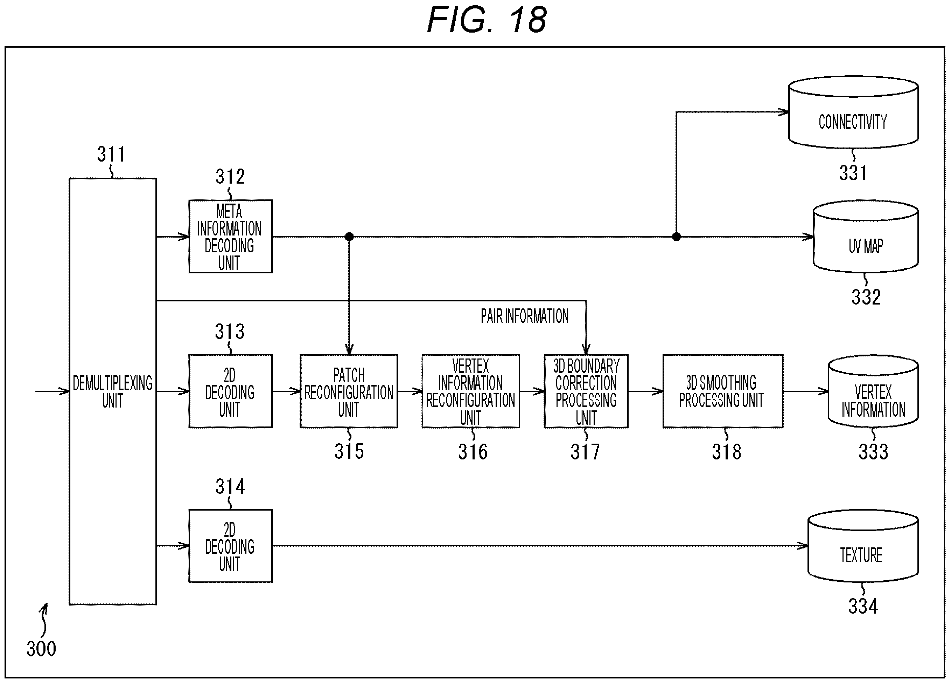

Fig. 18 is a block diagram illustrating an example of a configuration of a decoding device that is an aspect of an information processing device when Method 1-1 is applied. A decoding device 300 illustrated in Fig. 18 is a device that decodes encoded data, obtained by extending VPCC and encoding 3D data using a mesh as a video frame by an encoding method for two-dimensional images, by a decoding method for two-dimensional images to generate (reconfigure) 3D data using a mesh. At that time, the decoding device 300 applies Method 1-1 described above to decode the encoded data and reconfigure the 3D data.

Note that while Fig. 18 illustrates main elements such as processing units and data flows, those illustrated in Fig. 18 do not necessarily include all elements. That is, in the decoding device 300, there may be a processing unit not illustrated as a block in Fig. 18, or there may be a process or a data flow not illustrated as an arrow or the like in Fig. 18.

As illustrated in Fig. 18, the decoding device 300 includes a demultiplexing unit 311, a meta information decoding unit 312, a 2D decoding unit 313, a 2D decoding unit 314, a patch reconfiguration unit 315, a vertex information reconfiguration unit 316, 3D boundary correction processing unit 317, and a 3D smoothing processing unit 318.

Demultiplexing unit 311 acquires a bitstream input to the decoding device 300. This bitstream is obtained by extending VPCC and encoding 3D data using a mesh.

The demultiplexing unit 311 demultiplexes the bitstream and extracts (acquires) various data included in the bitstream. For example, demultiplexing unit 311 extracts the encoded data of meta information from the bitstream. Furthermore, the demultiplexing unit 311 extracts the encoded data of the geometry image and the encoded data of the occupancy image from the bitstream. Moreover, the demultiplexing unit 311 extracts the encoded data of the texture image from the bitstream.

The demultiplexing unit 311 supplies the encoded data of the extracted meta information to the meta information decoding unit 312. In addition, the demultiplexing unit 311 supplies the encoded data of the extracted geometry image and the encoded data of the occupancy image to the 2D decoding unit 313. Furthermore, the demultiplexing unit 311 supplies the encoded data of the extracted texture image to the 2D decoding unit 314.

The meta information decoding unit 312 acquires the encoded data of the meta information supplied from the demultiplexing unit 311. The meta information decoding unit 312 decodes the encoded data of the acquired meta information to generate meta information. The meta information includes a connectivity 331 indicating vertices and sides constituting each polygon. In addition, the meta information includes a UV map 332 indicating the position of each vertex in the texture image by UV coordinates. The meta information decoding unit 312 outputs the generated connectivity 331 and UV map 332 to the outside of the decoding device 300 as (data constituting) 3D data using the restored mesh. Furthermore, the meta information decoding unit 312 supplies the generated connectivity 331 and UV map 332 to the patch reconfiguration unit 315.

The 2D decoding unit 313 acquires the encoded data of the geometry image and the encoded data of the occupancy image supplied from the demultiplexing unit 311. The 2D decoding unit 313 decodes the acquired encoded data of the geometry image by the decoding method for 2D images to generate a geometry image. In addition, the 2D decoding unit 313 decodes the acquired encoded data of the occupancy image by the decoding method for 2D images to generate an occupancy image. The 2D decoding unit 313 supplies the generated geometry image and occupancy image to the patch reconfiguration unit 315.

The 2D decoding unit 314 acquires the encoded data of the texture image supplied from the demultiplexing unit 311. The 2D decoding unit 314 decodes the encoded data of the acquired texture image by the decoding method for 2D images to generate a texture image (texture 334) in which a texture to be attached on each polygon is placed for each patch. The 2D decoding unit 314 outputs the generated texture image (texture 334) to the outside of the decoding device 300 as (data constituting) 3D data using the restored mesh.

The patch reconfiguration unit 315 acquires the meta information (connectivity 331, UV map 332, etc.) supplied from the meta information decoding unit 312. Furthermore, the patch reconfiguration unit 315 acquires the geometry image and the occupancy image supplied from the 2D decoding unit 313. The patch reconfiguration unit 315 extracts a patch image from the geometry image, using the occupancy image and the meta information, and reconfigures a patch corresponding to the extracted patch image. The patch reconfiguration unit 315 supplies the reconfigured patch and the used meta information (connectivity 331, UV map 332, etc.) to the vertex information reconfiguration unit 316.

The vertex information reconfiguration unit 316 acquires the patch and the meta information supplied from the patch reconfiguration unit 315. The vertex information reconfiguration unit 316 reconfigures vertices included in the area of the patch from the acquired patch to generate vertex information configured by three-dimensional coordinates of each vertex. The vertex information reconfiguration unit 316 supplies the generated vertex information and meta information (connectivity 331, UV map 332, etc.) to the 3D boundary correction processing unit 317.

The 3D boundary correction processing unit 317 acquires the vertex information and the meta information (connectivity 331, UV map 332, etc.) supplied from the vertex information reconfiguration unit 316. The 3D boundary correction processing unit 317 performs the boundary correction process on the vertex information. That is, the 3D boundary correction processing unit 317 executes the 3D boundary correction process. The 3D boundary correction processing unit 317 performs, for example, zippering or a pairing process as the 3D boundary correction process. When the 3D boundary correction processing unit 317 performs the pairing process, the bitstream acquired by the demultiplexing unit 311 includes pair information. The demultiplexing unit 311 extracts the pair information from the bitstream and supplies the pair information to the 3D boundary correction processing unit 317. The 3D boundary correction processing unit 317 acquires the pair information and performs the pairing process using the pair information. The 3D boundary correction processing unit 317 corrects the three-dimensional coordinates of the boundary vertices by this boundary correction process. The 3D boundary correction processing unit 317 supplies the vertex information after boundary correction to the 3D smoothing processing unit 318. Furthermore, the 3D boundary correction processing unit 317 supplies other information such as the meta information (connectivity 331, UV map 332, etc.) and the pair information to the 3D smoothing processing unit 318 as necessary.

The 3D smoothing processing unit 318 acquires the vertex information and other information (meta information, pair information, etc.) supplied from the 3D boundary correction processing unit 317. The 3D smoothing processing unit 318 applies Method 1-1-3 described above, and executes the 3D smoothing process on the correction target point within the partial area with the boundary-corrected patch boundary point as the reference point. That is, the 3D smoothing processing unit 318 corrects the three-dimensional coordinates of the correction target point. At that time, the 3D smoothing processing unit 318 may also apply Method 1-1-1 and Method 1-1-2. The 3D smoothing processing unit 318 outputs vertex information 333 after the 3D smoothing process to the outside of the decoding device 300 as (data constituting) 3D data using the restored mesh.

Note that these processing units may have any configuration. For example, each processing unit may be configured by a logic circuit that achieves the processes described above. Furthermore, each of the processing units may include, for example, a central processing unit (CPU), a read-only memory (ROM), a random-access memory (RAM), and the like, and execute a program, using the CPU, the ROM, the RAM, and the like, thereby implementing the processes described above. Needless to say, each processing unit may have both the configurations, and some of the processes described above may be implemented by a logic circuit and the others may be achieved by executing the program. The configurations of the processing units may be independent from each other, and, for example, among the processing units, some processing units may achieve some of the processes described above with a logic circuit, some other processing units may achieve the processes described above by executing a program, and still some other processing units may achieve the processes described above with both a logic circuit and execution of a program.

With such a configuration, the decoding device 300 can bring the shape of the object after reconfiguration close to the shape of the object before encoding, and can mitigate a reduction in the subjective quality of the 3D data.

### <Flow of Decoding Process>

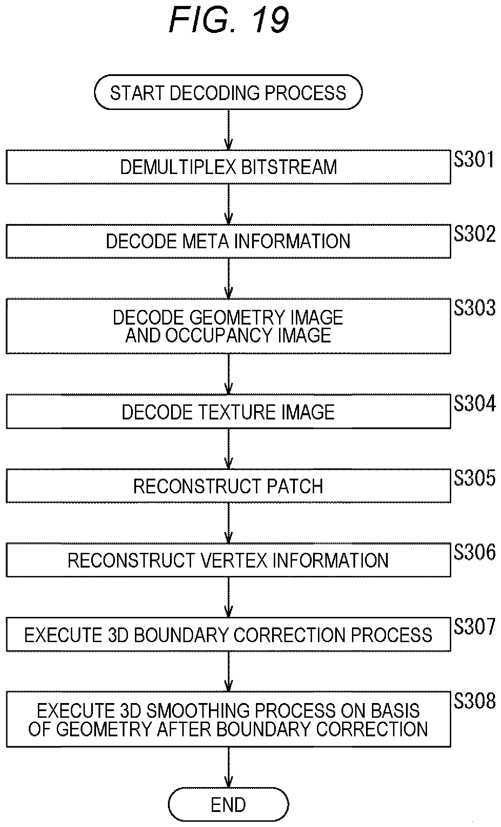

An example of the flow of the decoding process executed by the decoding device 300 will be described with reference to the flowchart of Fig. 19.

When the decoding process is started, in step S301, the demultiplexing unit 311 demultiplexes the bitstream input to the decoding device 300 and extracts various data. For example, the demultiplexing unit 311 extracts, from the bitstream, the encoded data of the meta information, the encoded data of the geometry image, the encoded data of the occupancy image, the encoded data of the texture image, and the like.

In step S302, meta information decoding unit 312 decodes the encoded data of the meta information extracted from the bitstream in step S301 to generate (restore) the meta information. This meta information includes the connectivity 331 and the UV map 332.

In step S303, the 2D decoding unit 313 decodes the encoded data of the geometry image extracted from the bitstream in step S301 to generate (restore) the geometry image. In addition, the 2D decoding unit 313 decodes the encoded data of the occupancy image extracted from the bitstream in step S301 to generate (restore) the occupancy image.

In step S304, the 2D decoding unit 314 decodes the encoded data of the texture image extracted from the bitstream in step S301 to generate (restore) the texture image (texture 334) .

In step S305, the patch reconfiguration unit 315 extracts a patch image from the geometry image generated in step S303 using the meta information (connectivity 331, UV map 332, etc.) generated in step S302, and reconfigures a patch corresponding to the patch image.

In step S306, the vertex information reconfiguration unit 316 reconfigures vertices included in the area of the patch from the patch reconfigured in step S305 to generate vertex information.

In step S307, the 3D boundary correction processing unit 317 executes the 3D boundary correction process, and corrects the three-dimensional coordinates of the boundary vertices included in the vertex information generated in step S306.

In step S308, the 3D smoothing processing unit 318 executes the 3D smoothing process using the boundary-corrected vertex information in step S307 as the reference point on the basis of the geometry after boundary correction, and corrects the three-dimensional coordinates of the correction target point corresponding to the reference point.

When the process of step S308 ends, the decoding process ends.

By executing each process in this manner, the decoding device 300 can bring the shape of the object after reconfiguration close to the shape of the object before encoding, and can mitigate a reduction in subjective quality of the 3D data.

### <Decoding Device>

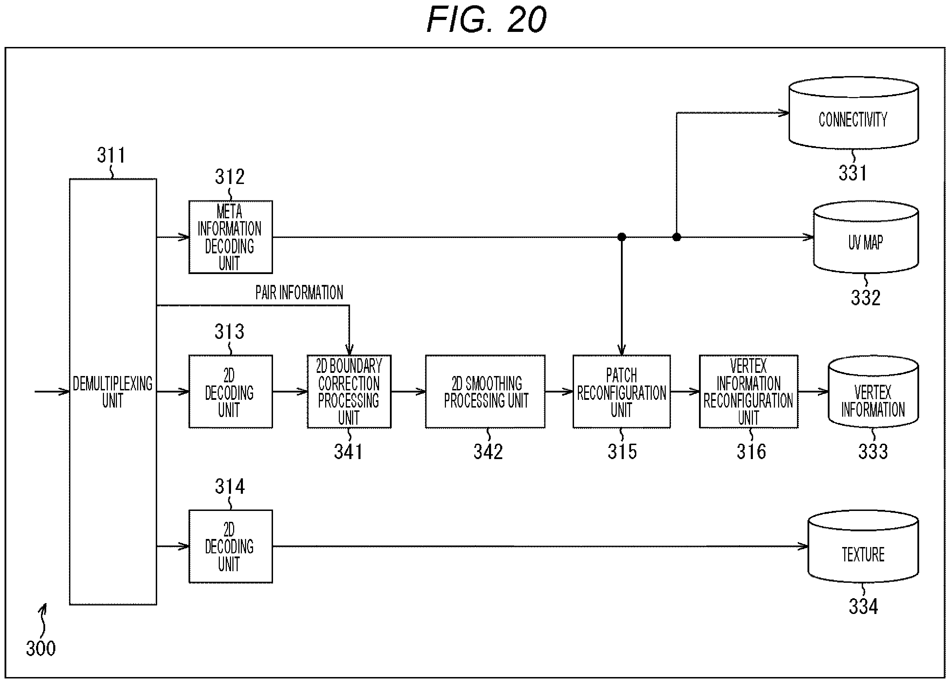

As described above, the 2D smoothing process may be applied. Fig. 20 is a block diagram illustrating a main configuration example of the decoding device 300 in that case.

Note that, in Fig. 20, main processing units, data flows, and the like are illustrated, and those illustrated in Fig. 20 are not necessarily all. That is, in the decoding device 300, there may be a processing unit not illustrated as a block in Fig. 20, or there may be a process or a data flow not illustrated as an arrow or the like in Fig. 20.

In this case, the decoding device 300 includes a 2D boundary correction processing unit 341 and a 2D smoothing processing unit 342 instead of the 3D boundary correction processing unit 317 and the 3D smoothing processing unit 318. In this case, the 2D decoding unit 313 supplies the generated geometry image and occupancy image to the 2D boundary correction processing unit 341.

The 2D boundary correction processing unit 341 acquires the geometry image and the occupancy image. The 2D boundary correction processing unit 341 executes the 2D boundary correction process such as the pairing process on the geometry image. As a result, the pixel value (depth value) of the boundary vertex in the geometry image is corrected. For example, when the 2D boundary correction processing unit 341 performs the pairing process, the bitstream acquired by the demultiplexing unit 311 includes pair information. The demultiplexing unit 311 extracts the pair information from the bitstream and supplies the pair information to the 2D boundary correction processing unit 341. The 2D boundary correction processing unit 341 acquires the pair information and performs the pairing process using the pair information. The 2D boundary correction processing unit 341 corrects the pixel value (depth value) of the boundary vertex in the geometry image by this boundary correction process. The 2D boundary correction processing unit 341 supplies the geometry image after boundary correction to the 2D smoothing processing unit 342. In addition, the 2D boundary correction processing unit 341 supplies an occupancy image, pair information, and the like to the 2D smoothing processing unit 342.

The 2D smoothing processing unit 342 acquires the geometry image, the occupancy image, the pair information, and the like supplied from the 2D boundary correction processing unit 341. The 2D smoothing processing unit 342 applies Method 1-1-4 described above, and executes the 2D smoothing process on the correction target point within the partial area with the boundary-corrected patch boundary point as the reference point. That is, the 2D smoothing processing unit 342 corrects the pixel value (depth value) of the correction target point in the geometry image. At that time, the 2D smoothing processing unit 342 may also apply Method 1-1-1 and Method 1-1-2. The 2D smoothing processing unit 342 supplies the geometry image after the 2D smoothing process to the patch reconfiguration unit 315 together with the occupancy image, the pair information, and the like.

With such a configuration, the decoding device 300 can bring the shape of the object after reconfiguration close to the shape of the object before encoding, and can mitigate a reduction in the subjective quality of the 3D data.

### <Flow of Decoding Process>

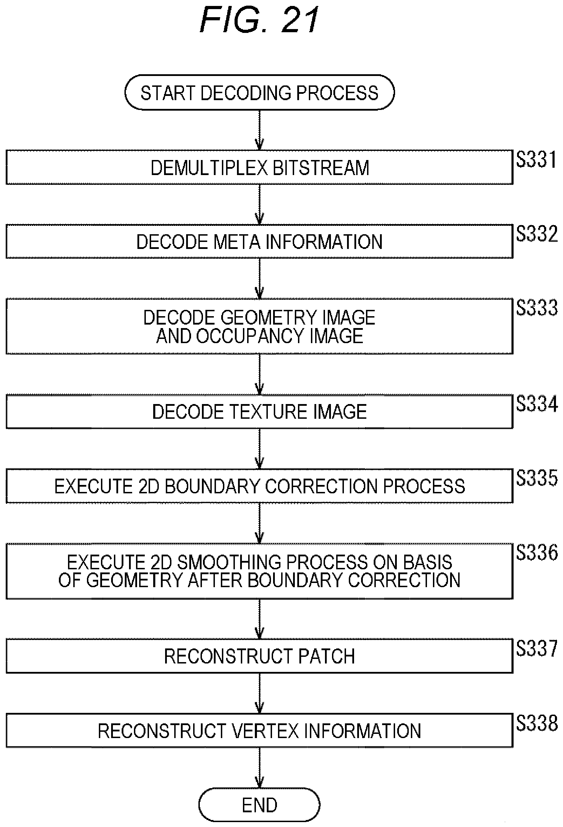

An example of the flow of the decoding process executed by the decoding device 300 will be described with reference to the flowchart in Fig. 21.

When the decoding process is started, the respective processes of steps S331 to S334 are executed similarly to the respective processes of steps S301 to S304 in Fig. 19.

In step S335, the 2D boundary correction processing unit 341 executes the 2D boundary correction process such as the pairing process, and corrects the pixel value (depth value) of the boundary vertex in the geometry image obtained in step S333.

In step S336, the 2D smoothing processing unit 342 executes the 2D smoothing process using the boundary-corrected vertex information in step S335 as the reference point on the basis of the geometry after boundary correction, and corrects the pixel value (depth value) of the correction target point corresponding to the reference point in the geometry image.

The respective processes of steps S337 and S338 are performed similarly to the respective processes of steps S305 and S306 of Fig. 19.

When the process of step S338 ends, the decoding process ends.

By executing each process in this manner, the decoding device 300 can bring the shape of the object after reconfiguration close to the shape of the object before encoding, and can mitigate a reduction in subjective quality of the 3D data.

### <Combination>

Note that the example described with reference to Figs. 18 and 19 and the example described with reference to Figs. 20 and 21 can be applied by appropriately combining some or all of them.

For example, the 2D boundary correction process and the 3D smoothing process may be applied. For example, in the decoding device 300, the 2D boundary correction processing unit 341 and the 3D smoothing processing unit 318 may be applied. In addition, in the decoding process, the process of step S335 and the process of step S308 may be applied.

Furthermore, for example, the decoding device 300 may support both the 2D smoothing process and the 3D smoothing process. That is, one of the 2D smoothing process and the 3D smoothing process may be selected and executed. For example, in the decoding device 300, the 2D smoothing processing unit 342 and the 3D smoothing processing unit 318 may be applied. In addition, in the decoding process, the process of step S336 and the process of step S308 may be applied.

### <4. Smoothing Process Based on Position Correction Coordinate Information>

When Method 1 described above is applied, the information processing device may perform this smoothing process on the basis of position correction coordinate information as illustrated in the twelfth row from the top of the table in Fig. 6 (Method 1-2). The position correction coordinate information is information regarding a position correction target point that is a vertex to be subjected to the position correction process. The position correction process is a geometry correction process different from the boundary correction and the smoothing process, and is a process of correcting the vertex position by substitution or operation. This position correction process is executed on the basis of the position correction coordinate information.

For example, when the position correction of the vertex is performed in the decoding device, the original position (also referred to as correct coordinates) of the vertex before encoding may not be able to be specified. For example, when a plurality of boundary vertices is integrated by the boundary correction process, a case where the patches of the respective boundary vertices are projected in the same direction (forward direction or reverse direction), or other cases, correct coordinates may not be obtained in the decoding device.

In such cases, the encoding device transmits information indicating the correct coordinates (coordinates before encoding) to the decoding device, and the decoding device corrects the vertex on the basis of the information, so that it is possible to achieve correction that mitigates a reduction in the subjective quality of the 3D data.

The position correction process described above is a process of performing such correction on the basis of the position correction coordinate information transmitted from the encoding device. That is, the position correction process is a process of setting a vertex specified on the basis of the position correction coordinate information transmitted from the encoding device as a processing target and moving the process target vertex to a position derived on the basis of the position correction coordinate information.

For example, as described above, by using the position correction process to correct the boundary vertex for which the correct coordinates cannot be obtained in the boundary correction process (i.e., moving the boundary to the correct coordinates specified by the encoding device), it is possible to achieve correction that mitigates a reduction in the subjective quality of the 3D data.

That is, the encoding device generates the position correction coordinate information and provides the position correction coordinate information to the decoding device. The decoding device executes the position correction process on the basis of the provided position correction coordinate information. Then, in the case of Method 1-2, the decoding device performs the smoothing process on the basis of the provided position correction coordinate information. For example, the decoding device may further include a position correction unit that executes, on the basis of position correction coordinate information including information regarding a position correction target point to be corrected and a geometry after correction, the position correction process to correct the geometry of the position correction target point, and the smoothing unit of the decoding device may set the reference point on the basis of the position correction coordinate information.

### <Position Correction Coordinate Information of Boundary Vertex>

When Method 1-2 described above is applied, the position correction target point may be the boundary vertex (the boundary correction target point) as illustrated in the thirteenth row from the top of the table in Fig. 6 (Method 1-2-1). For example, the encoding device may set the boundary vertex for which the correct coordinates cannot be obtained in the boundary correction as the position correction target point, generate the position correction coordinate information indicating the correct coordinates of the boundary vertex, and provide the position correction coordinate information to the decoding device. Here, the boundary vertex for which the correct coordinates cannot be obtained is, for example, a boundary vertex when the patch normal line is in the same direction as described above, a case where the coordinate movement such as texel-based projection is not only in one direction, or other cases.

After boundary correction, the decoding device may perform the position correction process on the basis of the position correction coordinate information, and move the boundary vertex to the correct coordinates. Moreover, when the decoding device specifies the reference point of the smoothing process, the boundary vertex (boundary vertex to be subjected to the position correction process) corresponding to the position correction coordinate information may be used as the reference point.

In this way, the smoothing process can also be executed on the correction target point having the boundary vertex subjected to the position correction process instead of the boundary correction as the reference point. Therefore, it is possible to achieve correction that mitigates a reduction in the subjective quality of the 3D data.

### <Position Correction Coordinate Information of in-patch vertices>

Furthermore, when Method 1-2 described above is applied, as illustrated in the fourteenth row from the top of the table in Fig. 6, the vertex to be subjected to the position correction process may not be the boundary vertex but may be a vertex within the patch (also referred to as an in-patch vertex) (Method 1-2-2). For example, the encoding device may set an in-patch vertex for which distortion after decoding relative to before encoding is larger than a predetermined threshold as the position correction target point, generate position correction coordinate information indicating the coordinates of the in-patch vertex before encoding as correct coordinates, and provide the position correction coordinate information to the decoding device.

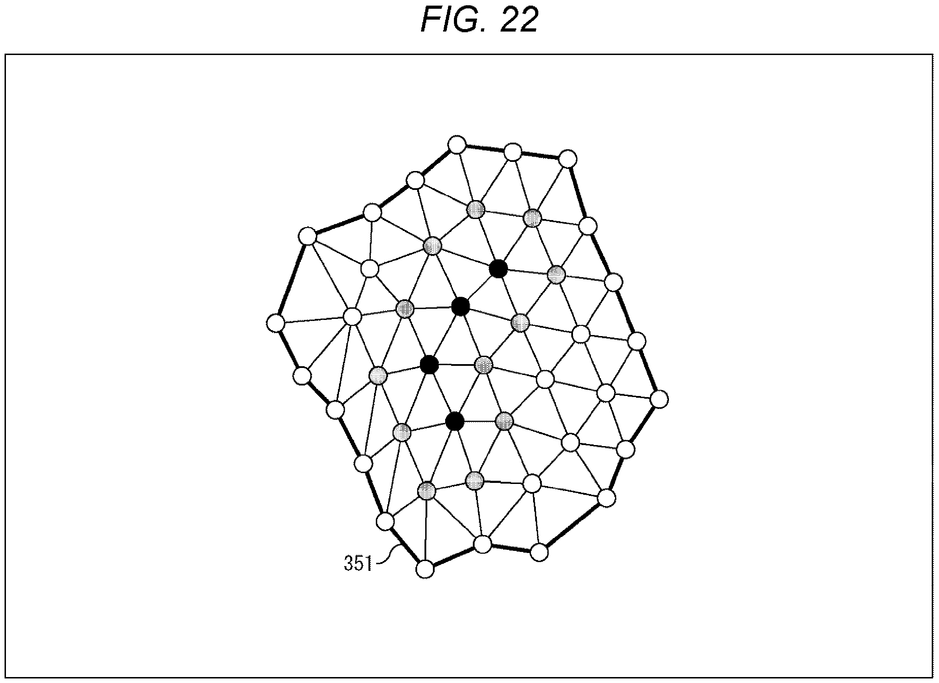

Then, the decoding device may perform the position correction process on the basis of the position correction coordinate information and move the in-patch vertex to the correct coordinates. Moreover, when the decoding device specifies the reference point of the smoothing process, the in-patch vertex (the in-patch vertex to be subjected to the position correction process) corresponding to the position correction coordinate information may be used as the reference point. For example, in the patch 351 illustrated in Fig. 22, the smoothing process may be performed with the in-patch vertex indicated by the black circle set as the reference point and the vertex indicated by the gray circle located around the reference point set as the correction target point.

In this way, the smoothing process can also be executed on the correction target point having the in-patch vertex having the large encoding distortion as the reference point. Therefore, it is possible to achieve correction that mitigates a reduction in the subjective quality of the 3D data.

### <Position Correction Coordinate Information>

When Method 1-2 described above is applied, the position correction coordinate information may include information for specifying the position correction target point as illustrated in the fifteenth row from the top of the table of Fig. 6 (Method 1-2-3). For example, the position correction coordinate information may include a position correction flag indicating whether or not each vertex is a position correction target. Furthermore, the position correction coordinate information may include the identification information of the vertex to subjected to the position correction. In addition, the position correction coordinate information may include coordinates (u, v) within the geometry image of the vertex to be subjected to the position correction.

When Method 1-2 described above is applied, the position correction coordinate information may include information regarding the coordinates (correct coordinates) after position correction as illustrated in the sixteenth row from the top of the table of Fig. 6 (Method 1-2-4). For example, the correct coordinates may be 3D coordinates (xyz, etc.). In this case, the value may be an absolute value or a difference from the coordinates before correction. In addition, the correct coordinates may be a pixel value (e.g., the depth value, xyz based on the projection surface, etc.) of the geometry image. The value may be an absolute value or a difference from the coordinates before correction.

### <Encoding Device>

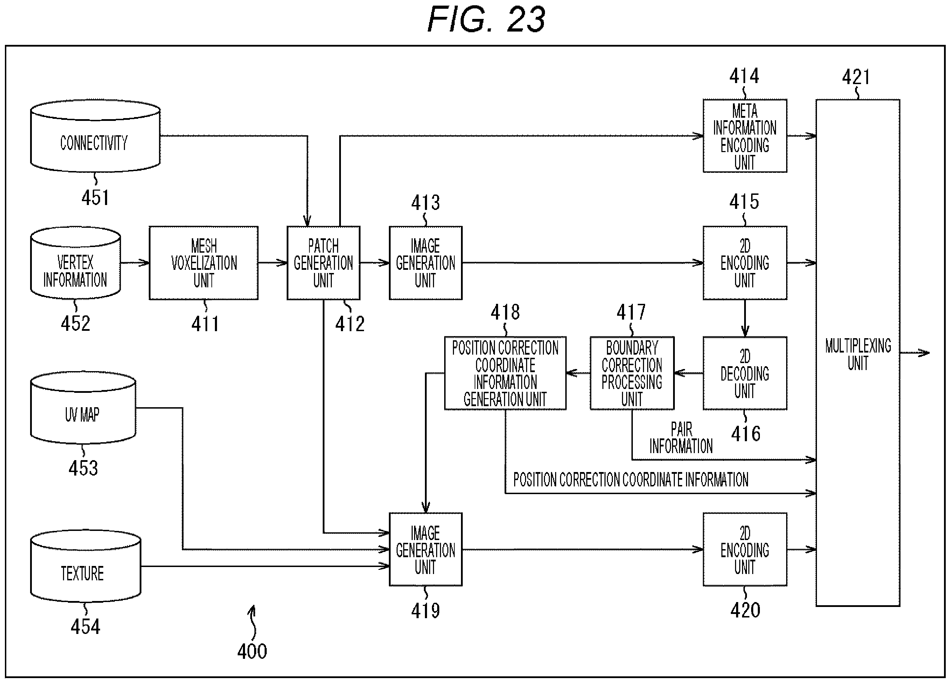

Fig. 23 is a block diagram illustrating an example of a configuration of an encoding device that is an aspect of an information processing device when Method 1-2 is applied. An encoding device 400 illustrated in Fig. 23 is a device that extends VPCC and encodes 3D data using a mesh as a video frame by the encoding method for two-dimensional images. At that time, the encoding device 400 encodes the 3D data by applying Method 1-2 described above.

Note that, in Fig. 23, main processing units, data flows, and the like are illustrated, and those illustrated in Fig. 23 are not necessarily all. That is, in the encoding device 400, there may be a processing unit not illustrated as a block in Fig. 23, or there may be a process or a data flow not illustrated as an arrow or the like in Fig. 23.

As illustrated in Fig. 23, the encoding device 400 includes a mesh voxelization unit 411, a patch generation unit 412, an image generation unit 413, a meta information encoding unit 414, a 2D encoding unit 415, a 2D decoding unit 416, a boundary correction processing unit 417, a position correction coordinate information generation unit 418, an image generation unit 419, a 2D encoding unit 420, and a multiplexing unit 421.

The encoding device 400 is supplied with a connectivity 451, a vertex information 452, a UV map 453, and a texture 454 as 3D data using a mesh.

The connectivity 451 is information similar to the connectivity 32 (Fig. 2), and indicates, for each polygon, vertices (vertices connected to each other) forming the polygon. The vertex information 452 is information similar to the vertex information 31 (Fig. 2) and indicates the coordinates of each vertex forming the mesh. The UV map 453 is information similar to the UV map 34 (Fig. 2) and indicates the position of each vertex on the texture image. The texture 454 is information similar to that of the texture image 33 (Fig. 2), and indicates the texture to be attached on the polygon. That is, the texture 454 is information including a texture image.

The mesh voxelization unit 411 acquires the vertex information 452 supplied to the encoding device 400. The mesh voxelization unit 411 converts the coordinates of each vertex included in the acquired vertex information 452 into a voxel grid. The mesh voxelization unit 411 supplies the vertex information of the voxel grid after conversion to the patch generation unit 412.

The patch generation unit 412 acquires the connectivity 451 supplied to the encoding device 400. Furthermore, the patch generation unit 412 acquires vertex information of the voxel grid supplied from the mesh voxelization unit 411. The patch generation unit 412 generates a geometry patch on the basis of the information. In addition, the patch generation unit 412 projects the generated geometry patch onto the projection surface to generate a patch image.

The patch generation unit 412 supplies the generated patch image to the image generation unit 413. Furthermore, the patch generation unit 412 supplies information such as the connectivity 451 and vertex information to the meta information encoding unit 414 as meta information. Moreover, the patch generation unit 412 supplies the generated patch image to the image generation unit 419.

The image generation unit 413 acquires the patch image supplied from the patch generation unit 412. The image generation unit 413 places the patch image on a two-dimensional plane to generate a geometry image and an occupancy image". The image generation unit 413 supplies the generated geometry image and occupancy image to the 2D encoding unit 415.

The meta information encoding unit 414 acquires the meta information (connectivity 451, vertex information, etc.) supplied from the patch generation unit 412. The meta information encoding unit 414 encodes the acquired meta information and generates encoded data of the meta information. The meta information encoding unit 414 supplies the generated encoded data of the meta information to the multiplexing unit 421.

The 2D encoding unit 415 acquires the geometry image and the occupancy image supplied from the image generation unit 413. The 2D encoding unit 415 encodes the acquired geometry image and occupancy image by the encoding method for 2D images to generate the encoded data of the geometry image and encoded data of the occupancy image. The 2D encoding unit 415 supplies the multiplexing unit 421 with the generated encoded data of the geometry image and the generated encoded data of the occupancy image. Furthermore, the 2D encoding unit 415 supplies the generated encoded data of the geometry image to the 2D decoding unit 416.

The 2D decoding unit 416 decodes the encoded data of the geometry image supplied from the 2D encoding unit 415 by the decoding method for 2D images to generate a geometry image. The 2D decoding unit 416 supplies the geometry image to the boundary correction processing unit 417.

The boundary correction processing unit 417 executes the boundary correction process using the geometry image supplied from the 2D decoding unit 416, and corrects the positions of the boundary vertices as necessary. This boundary correction process may be a 2D boundary correction process or a 3D boundary correction process. Furthermore, when the pairing process is performed as the boundary correction process, the boundary correction processing unit 417 generates pair information and supplies the pair information to the multiplexing unit 421. The boundary correction processing unit 417 supplies the geometry image after boundary correction to the position correction coordinate information generation unit 418.

On the basis of the geometry image supplied from the boundary correction processing unit 417, the position correction coordinate information generation unit 418 obtains a position correction process target and its correct coordinates to generate position correction coordinate information related thereto. At that time, the position correction coordinate information generation unit 418 can apply Methods 1-2-1 to 1-2-4. The position correction coordinate information generation unit 418 supplies the generated position correction coordinate information to the multiplexing unit 421.

The image generation unit 419 acquires the UV map 453 and the texture 454 supplied to the encoding device 400. In addition, the image generation unit 419 acquires the patch image of the geometry supplied from the patch generation unit 412. The image generation unit 419 updates the texture 454 on the basis of these pieces of information to generate a texture image. The image generation unit 419 supplies the generated texture image to the 2D encoding unit 420.

The 2D encoding unit 420 encodes the texture image supplied from the image generation unit 419 by the encoding method for 2D images to generate the encoded data of the texture image. The 2D encoding unit 420 supplies the generated encoded data of the texture image to the multiplexing unit 421.

The multiplexing unit 421 acquires the encoded data of the meta information supplied from the meta information encoding unit 414. The multiplexing unit 421 acquires the encoded data of the geometry image and the encoded data of the occupancy image supplied from the 2D encoding unit 415. The multiplexing unit 421 acquires the pair information supplied from the boundary correction processing unit 417. The multiplexing unit 421 acquires the position correction coordinate information supplied from the position correction coordinate information generation unit 418. The multiplexing unit 421 acquires the encoded data of the texture image supplied from the 2D encoding unit 420. The multiplexing unit 421 multiplexes the acquired information to generate one bitstream. The multiplexing unit 421 outputs the generated bitstream to the outside of the encoding device 400. This bitstream is provided to the decoding device 300, for example. Therefore, the multiplexing unit 421 can also be said to be a provision unit that provides information.

Note that these processing units may have any configuration. For example, each processing unit may be configured by a logic circuit that achieves the processes described above. Furthermore, each of the processing units may include, for example, a central processing unit (CPU), a read-only memory (ROM), a random-access memory (RAM), and the like, and execute a program, using the CPU, the ROM, the RAM, and the like, thereby implementing the processes described above. Needless to say, each processing unit may have both the configurations, and some of the processes described above may be implemented by a logic circuit and the others may be achieved by executing the program. The configurations of the processing units may be independent from each other, and, for example, among the processing units, some processing units may achieve some of the processes described above with a logic circuit, some other processing units may achieve the processes described above by executing a program, and still some other processing units may achieve the processes described above with both a logic circuit and execution of a program.

With such a configuration, the encoding device 400 can generate the position correction coordinate information and provide the position correction coordinate information to the decoding device. Thus, the decoding device can execute the position correction process and the smoothing process on the basis of the position correction coordinate information. Therefore, it is possible to mitigate a reduction in the subjective quality of the 3D data.

### <Flow of Encoding Process>

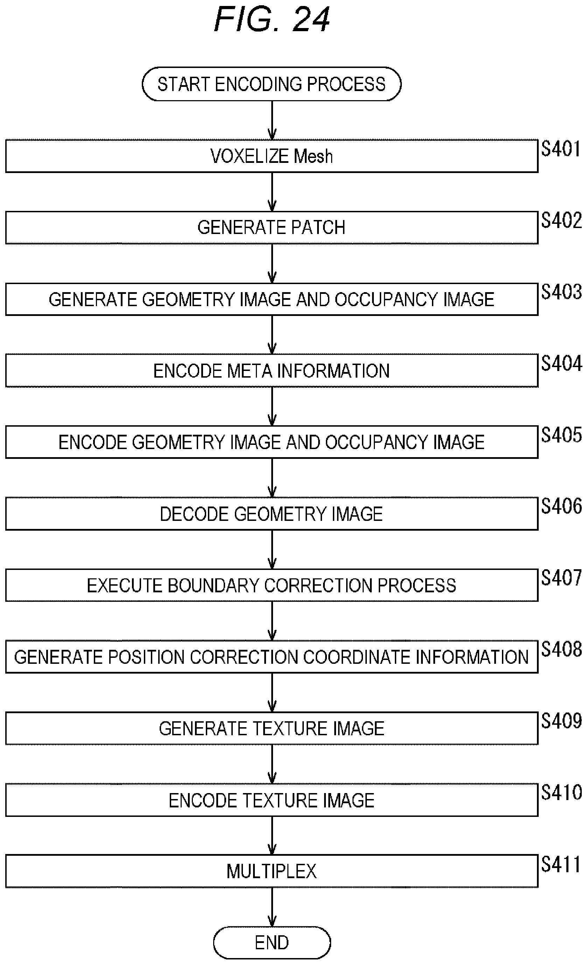

An example of the flow of the encoding process executed by the encoding device 400 will be described with reference to the flowchart in Fig. 24.

When the encoding process is started, in step S401, the mesh voxelization unit 411 voxelizes the coordinates of each vertex included in the vertex information 452 to voxelize the mesh.

In step S402, the patch generation unit 412 generates a patch using the vertex information and the like voxelized in step S401, and projects the generated patch on the projection surface to generate a patch image.

In step S403, the image generation unit 413 generates a geometry image and an occupancy image on the basis of the patch image generated in step S402.

In step S404, the meta information encoding unit 414 encodes the meta information (connectivity 451, vertex information, etc.) to generate the encoded data of the meta information.

In step S405, the 2D encoding unit 415 performs 2D encoding on each of the geometry image and the occupancy image generated in step S403 to generate the encoded data of the geometry image and encoded data of the occupancy image.

In step S406, the 2D decoding unit 416 2D decodes the encoded data of the geometry image generated in step S405 to generate a geometry image.

In step S407, the boundary correction processing unit 417 executes the boundary correction process using the geometry image generated in step S406.

In step S408, the position correction coordinate information generation unit 418 generates position correction coordinate information using the geometry image. At that time, the position correction coordinate information generation unit 418 can apply Methods 1-2-1 to 1-2-4.

In step S409, the image generation unit 419 updates the texture 454 and generates a texture image in accordance with the geometry image.

In step S410, the 2D encoding unit 420 encodes the texture image to generate the encoded data of the texture image.

In step S411, the multiplexing unit 421 multiplexes the encoded data of the meta information generated in step S404, the encoded data of the geometry image and the encoded data of the occupancy image generated in step S405, the pair information generated in step S407, the position correction coordinate information generated in step S408, and the encoded data of the texture image generated in step S410 to generate one bitstream. The multiplexing unit 421 outputs the generated bitstream to the outside of the encoding device 400.

When the process of step S411 ends, the encoding process ends.

By executing each process in this manner, the encoding device 400 can generate position correction coordinate information and provide the position correction coordinate information to the decoding device. Thus, the decoding device can execute the position correction process and the smoothing process on the basis of the position correction coordinate information. Therefore, it is possible to mitigate a reduction in the subjective quality of the 3D data.

### <Decoding Device>

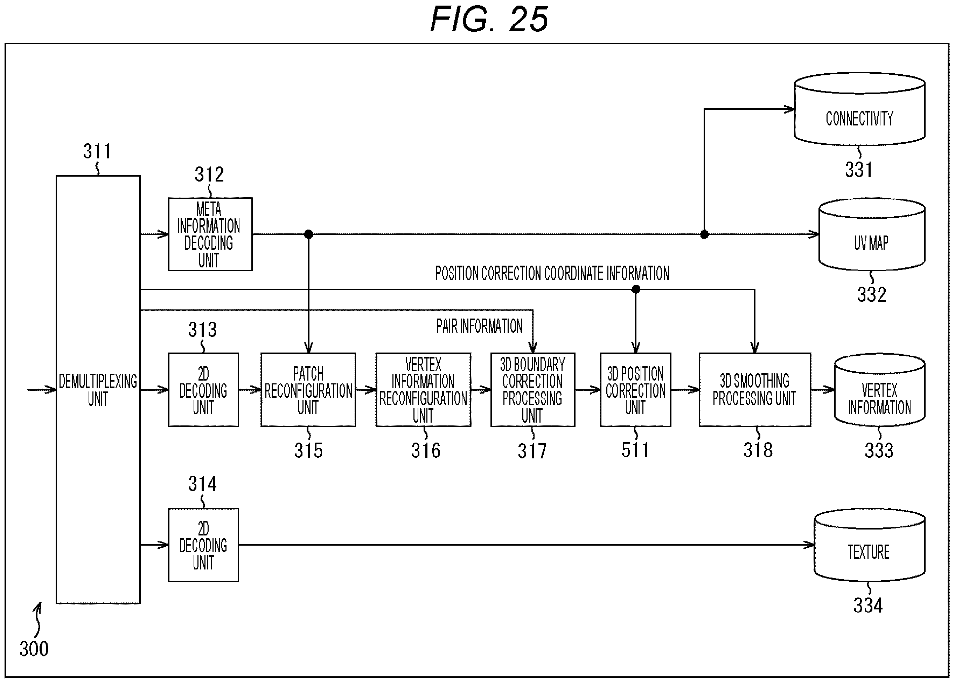

Fig. 25 is a block diagram illustrating a main configuration example of the decoding device 300 in this case. Fig. 25 illustrates a main configuration example of the decoding device (i.e., an example corresponding to the example of Fig. 18) that executes the 3D smoothing process.

Note that, in Fig. 25, main processing units, data flows, and the like are illustrated, and those illustrated in Fig. 25 are not necessarily all. That is, in the decoding device 300, there may be a processing unit not illustrated as a block in Fig. 25, or there may be a process or a data flow not illustrated as an arrow or the like in Fig. 25.

In this case, the decoding device 300 further includes a 3D position correction unit 511 in addition to the configuration illustrated in Fig. 18. In this case, the 3D boundary correction processing unit 317 supplies the vertex information after boundary correction to the 3D position correction unit 511. In addition, the 3D boundary correction processing unit 317 supplies other information such as the meta information (connectivity 331, UV map 332, etc.) and the pair information to the 3D position correction unit 511 as necessary.

Furthermore, in this case, the position correction coordinate information is included in the bitstream, and the demultiplexing unit 311 extracts the position correction coordinate information from the bitstream and supplies the position correction coordinate information to the 3D position correction unit 511 and the 3D smoothing processing unit 318.

The 3D position correction unit 511 corrects the positions of the vertices included in the vertex information after boundary correction supplied from the 3D boundary correction processing unit 317 on the basis of the position correction coordinate information. The 3D position correction unit 511 supplies the vertex information after position correction to the 3D smoothing processing unit 318.

The 3D smoothing processing unit 318 applies Method 1-2 described above, and executes the 3D smoothing process on the vertex information supplied from the 3D position correction unit 511 on the basis of the position correction coordinate information supplied from the demultiplexing unit 311. That is, on the basis of the position correction coordinate information, the 3D smoothing processing unit 318 executes the 3D smoothing process using the vertex to be subjected to the position correction process as the reference point, and corrects the three-dimensional coordinates of the correction target point corresponding to the reference point. At that time, the 3D smoothing processing unit 318 may also apply Methods 1-2-1 to 1-2-4. The 3D smoothing processing unit 318 outputs vertex information 333 after the 3D smoothing process to the outside of the decoding device 300 as (data constituting) 3D data using the restored mesh.

With such a configuration, the decoding device 300 can bring the shape of the object after reconfiguration close to the shape of the object before encoding, and can mitigate a reduction in the subjective quality of the 3D data.

### <Flow of Decoding Process>

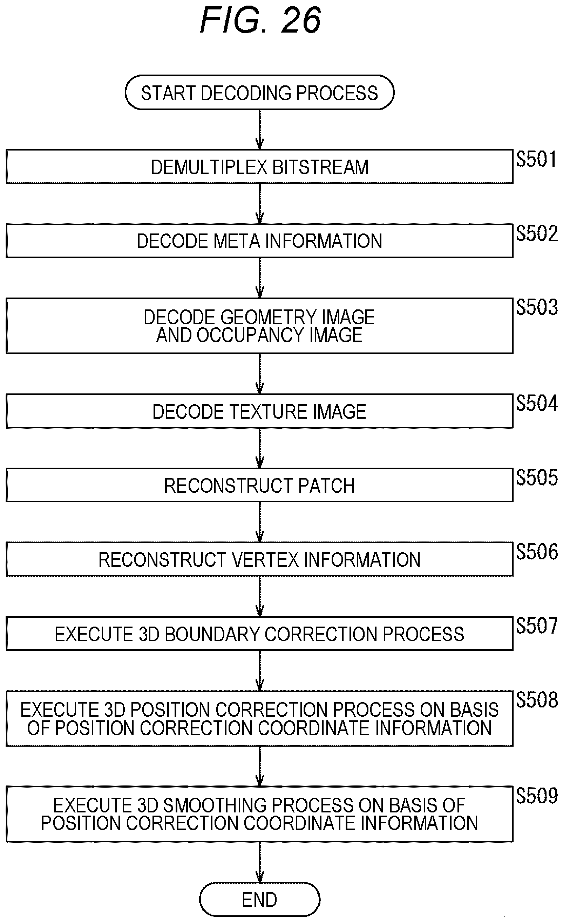

An example of a flow of the decoding process executed by the decoding device 300 will be described with reference to the flowchart in Fig. 26.

When the decoding process is started, the respective processes of steps S501 to S507 are executed similarly to the respective processes of steps S301 to S307 in Fig. 19.

In step S508, the 3D position correction unit 511 corrects the positions of the vertices included in the vertex information after boundary correction on the basis of the position correction coordinate information obtained in step S501.

In step S509, the 3D smoothing processing unit 318 applies Method 1-2 described above, executes the 3D smoothing process using the vertex to be subjected to the position correction process as the reference point on the basis of the position correction coordinate information obtained in step S501, and corrects the three-dimensional coordinates of the correction target point corresponding to the reference point. At that time, the 3D smoothing processing unit 318 may also apply Methods 1-2-1 to 1-2-4.

When the process of step S509 ends, the decoding process ends.

By executing each process in this manner, the decoding device 300 can bring the shape of the object after reconfiguration close to the shape of the object before encoding, and can mitigate a reduction in subjective quality of the 3D data.

### <Decoding Device>

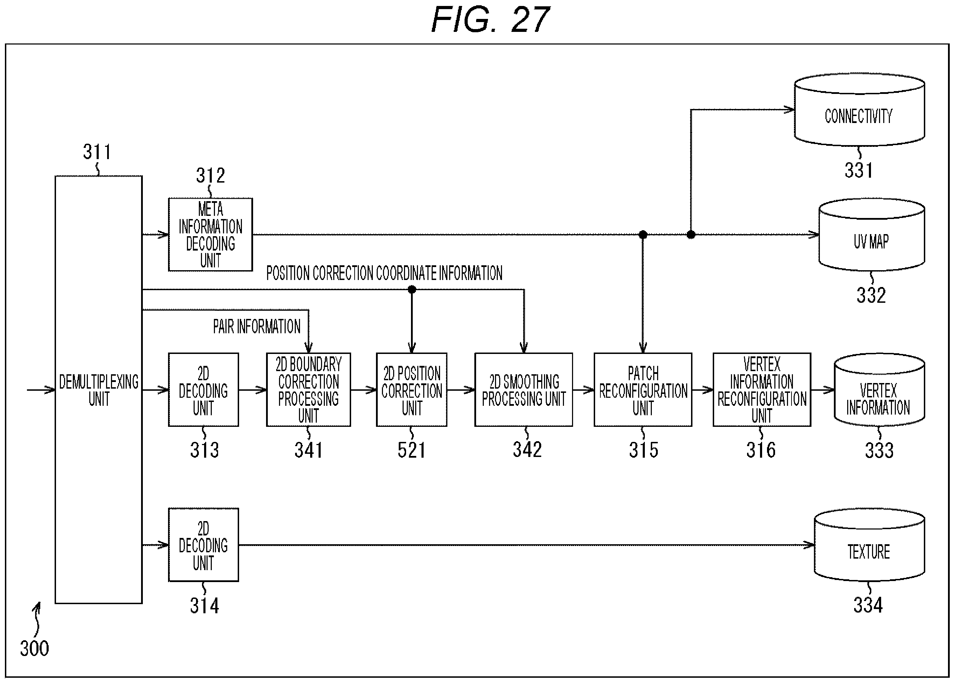

In the case of Method 1-2 as well, the 2D smoothing process may be applied as described above. Fig. 27 is a block diagram illustrating a main configuration example of the decoding device 300 in that case.

Note that, in Fig. 27, main processing units, data flows, and the like are illustrated, and those illustrated in Fig. 27 are not necessarily all. That is, in the decoding device 300, there may be a processing unit not illustrated as a block in Fig. 27, or there may be a process or a data flow not illustrated as an arrow or the like in Fig. 27.

In this case, the decoding device 300 further includes a 2D position correction unit 521 in addition to the configuration illustrated in Fig. 20. The 2D position correction unit 521 performs a process similar to that of the 3D position correction unit 511. However, the 2D position correction unit 521 corrects the positions of the vertices in the geometry image. That is, the 2D position correction unit 521 corrects the pixel value of the process target point in the geometry image. The 2D position correction unit 521 supplies the geometry image after the position correction process to the 2D smoothing processing unit 342.

The 2D smoothing processing unit 342 applies Method 1-2 described above, and executes the 2D smoothing process on the geometry image supplied from the 3D position correction unit 511 on the basis of the position correction coordinate information supplied from the demultiplexing unit 311. That is, on the basis of the position correction coordinate information, the 2D smoothing processing unit 342 executes the 2D smoothing process using the vertex to be subjected to the position correction process as the reference point, and corrects the three-dimensional coordinates of the correction target point corresponding to the reference point. At that time, the 2D smoothing processing unit 342 may also apply Methods 1-2-1 to 1-2-4. The 2D smoothing processing unit 342 supplies the geometry image after the 2D smoothing process to the patch reconfiguration unit 315.

With such a configuration, the decoding device 300 can bring the shape of the object after reconfiguration close to the shape of the object before encoding, and can mitigate a reduction in the subjective quality of the 3D data.

### <Flow of Decoding Process>

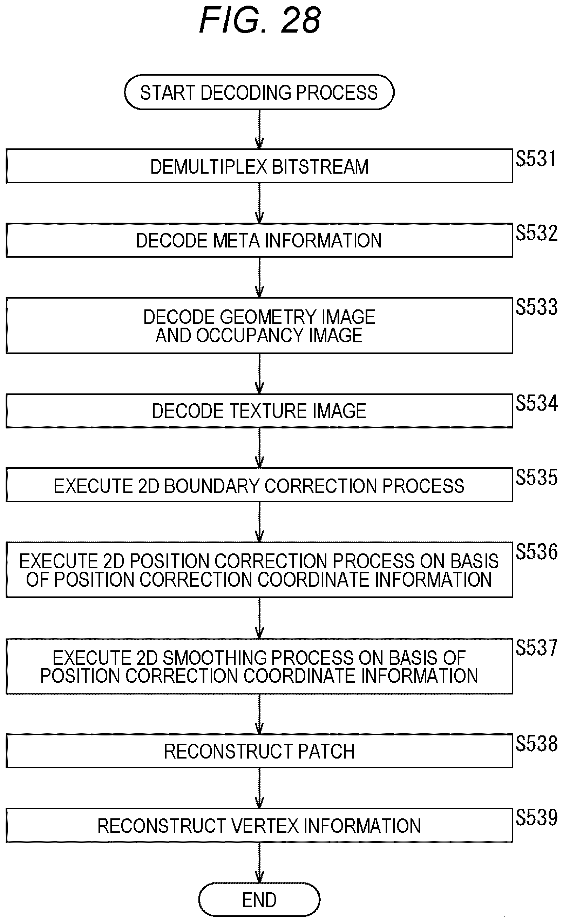

An example of the flow of the decoding process executed by the decoding device 300 will be described with reference to the flowchart in Fig. 28.

When the decoding process is started, the respective processes of steps S531 to S535 are executed similarly to the respective processes of steps S331 to S335 in Fig. 21.

In step S536, the 2D position correction unit 521 executes the 2D position correction process on the geometry image after boundary correction on the basis of the position correction coordinate information obtained in step S531, and corrects the pixel value of the position correction target point process in the geometry image.

In step S537, the 2D smoothing processing unit 342 applies Method 1-2 described above, executes the 2D smoothing process using the vertex to be subjected to the position correction process as the reference point on the basis of the position correction coordinate information obtained in step S531, and corrects the pixel value (depth value) of the correction target point corresponding to the reference point in the geometry image. At that time, the 2D smoothing processing unit 342 may also apply Methods 1-2-1 to 1-2-4.

The respective processes of steps S538 and S539 are performed similarly to the respective processes of steps S337 and S338 of Fig. 21.

When the process of step S539 ends, the decoding process ends.

By executing each process in this manner, the decoding device 300 can bring the shape of the object after reconfiguration close to the shape of the object before encoding, and can mitigate a reduction in subjective quality of the 3D data.

### <Combination>

Note that the example described with reference to Figs. 25 and 26 and the example described with reference to Figs. 27 and 28 can be applied by appropriately combining some or all of them.

For example, the 2D position correction process and the 3D smoothing process may be applied. For example, the 2D position correction unit 521 and the 3D smoothing processing unit 318 may be applied in the decoding device 300. In addition, in the decoding process, the process of step S536 and the process of step S509 may be applied.

Furthermore, for example, the decoding device 300 may support both the 2D smoothing process and the 3D smoothing process. That is, one of the 2D smoothing process and the 3D smoothing process may be selected and executed. For example, in the decoding device 300, the 2D smoothing processing unit 342 and the 3D smoothing processing unit 318 may be applied. In addition, in the decoding process, the process of step S537 and the process of step S509 may be applied.

### <5. Smoothing Process Based on Smoothing Information>

When Method 1 described above is applied, the information processing device may perform this smoothing process on the basis of the smoothing information as illustrated in the seventeenth row from the top of the table in Fig. 6 (Method 1-3).

The smoothing information is information regarding the smoothing process, and is generated by the encoding device and provided to the decoding device. The decoding device executes the smoothing process on the basis of the provided smoothing information. For example, the information processing device further includes an acquisition unit that acquires smoothing information including the transmitted information regarding smoothing, and the smoothing unit of the information processing device executes the smoothing process on the basis of the acquired smoothing information. In this way, the encoding device can control the smoothing process executed in the encoding device. In other words, the decoding device can execute the smoothing process according to the control of the encoding device.

In such a case as described above where the smoothing information is transmitted from the encoding device to the decoding device, the decoding device may apply Method 1-3 described above to perform the smoothing process on the basis of the smoothing information.

### <Reference Point specification information>

When Method 1-3 described above is applied, the decoding device may specify the reference point on the basis of the reference point specification information included in the smoothing information as illustrated in the eighteenth row from the top of the table in Fig. 6 (Method 1-3-1). The reference point specification information is information for specifying the reference point.

For example, a flag or the like for selecting a method (algorithm) for specifying the reference point may be used. For example, the following methods are prepared as options: a method of using a vertex corrected by zippering as the reference point; a method of using a vertex corrected by the pairing process as the reference point; a method of using a vertex having been a position correction target as the reference point; a method of using a vertex indicated by the reference point flag indicating whether or not to use the vertex as the reference point; and other methods. Then, a selection flag indicating which one of these candidates is applied may be stored in the smoothing information as the reference point specification information.

That is, in the case of Method 1-3-1, the encoding device generates smoothing information including such reference point specification information. Then, the decoding device applies the method specified by the reference point specification information to specify the reference point. In this way, the encoding device can control the method (algorithm) by which the decoding device specifies the reference point.

### <Correction Target Point specification information>

Furthermore, when Method 1-3 described above is applied, the decoding device may specify the correction target point (and the correction utilization point) on the basis of the correction target point specification information included in the smoothing information as illustrated in the nineteenth row from the top of the table in Fig. 6 (Method 1-3-2). The correction target point specification information is information for specifying the correction target point (and the correction utilization point).

For example, when the decoding device specifies the correction target point (and the correction utilization point) by the method (algorithm) using the parameter k as described above in the description of Method 1-1-2, the parameter k may be transmitted as the correction target point specification information. Furthermore, Information designating a method of specifying the correction target point (and the correction utilization point) using the pixel value (2D) of the geometry image, with the area within the surface rasterized, may be transmitted as the correction target point specification information. Moreover, information designating a method of specifying the correction target point (and the correction utilization point) using the geometry (3D) of the sampled vertex may be transmitted as the correction target point specification information. In addition, a plurality of methods may be set as candidates, and a selection flag or the like designating a method to be applied from the candidates may be transmitted as the correction target point specification information.

That is, in the case of Method 1-3-2, the encoding device generates smoothing information including such correction target point specification information. Then, the decoding device applies the method specified by the correction target point specification information to specify the correction target point (and the correction utilization point). In this way, the encoding device can control a method (algorithm) by which the decoding device specifies the correction target point (and the correction utilization point).

### <Correction method specification information>

Furthermore, when Method 1-3 described above is applied, as illustrated in the bottom row of the table in Fig. 6, the decoding device may execute the smoothing process on the basis of the correction method specification information included in the smoothing information (Method 1-3-3). The correction method specification information is information for specifying a method for the smoothing process.

For example, a plurality of correction methods may be set as candidates, and a selection flag or the like designating a method to be applied from the candidates may be transmitted as the correction method specification information. For example, Method 1-1-3-1, Method 1-1-3-2, Method 1-1-4-1, Method 1-1-4-2, and Method 1-1-4-3 described above may be selected, and a selection flag designating a method to be applied among these methods may be stored in the smoothing information as the correction method specification information.

That is, in the case of Method 1-3-3, the encoding device generates smoothing information including such correction method specification information. Then, the decoding device applies the method designated by the correction method specification information to execute the smoothing process. In this way, the encoding device can control the method for the smoothing process performed by the decoding device.

### <Encoding Device>

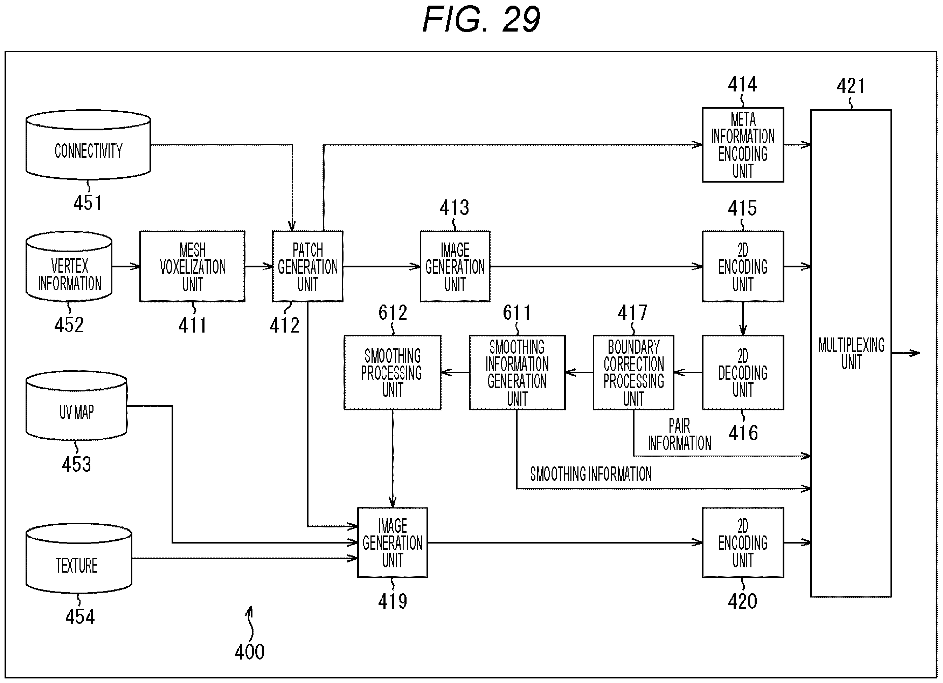

Fig. 29 is a block diagram illustrating an example of a configuration of an encoding device that is an aspect of an information processing device when Method 1-3 is applied.

Note that, in Fig. 29, main processing units, data flows, and the like are illustrated, and those illustrated in Fig. 29 are not necessarily all. That is, in the encoding device 400, there may be a processing unit not illustrated as a block in Fig. 29, or there may be a process or a data flow not illustrated as an arrow or the like in Fig. 29.

As illustrated in Fig. 29, the encoding device 400 in this case includes a smoothing information generation unit 611 and a smoothing processing unit 612 instead of the position correction coordinate information generation unit 418 of the configuration of the example of Fig. 23.

The smoothing information generation unit 611 acquires the geometry image supplied from the boundary correction processing unit 417. The smoothing information generation unit 611 generates smoothing information on the basis of the geometry image. Any method for the generation may be used. For example, the smoothing information generation unit 611 may generate the smoothing information such that the boundary-corrected boundary vertex is set as the reference point. That is, the smoothing information generation unit 611 may set the boundary vertex subjected to the boundary correction process as the reference point, and generate smoothing information including information regarding the smoothing process to smooth a geometry of a vertex within a partial area based on the reference point. In addition, the smoothing information generation unit 611 may generate the smoothing information such that a boundary vertex having a difference in position between vertices larger than a predetermined threshold by the boundary correction is set as the reference point.

The smoothing information generation unit 611 supplies the generated smoothing information to the multiplexing unit 421. The multiplexing unit 421 multiplexes the smoothing information with other encoded data or the like to generate a bitstream. This bitstream is provided to, for example, a decoding device. Therefore, the multiplexing unit 421 can be said to be a provision unit that provides the smoothing information.

In addition, the smoothing information generation unit 611 supplies the generated smoothing information to the smoothing processing unit 612 together with the geometry image and the like. The smoothing processing unit 612 executes the smoothing process on the acquired geometry image on the basis of the smoothing information. For example, the smoothing processing unit 612 specifies the reference point and the correction target point from the geometry image on the basis of the smoothing information, and corrects the position of the correction target point. This smoothing process may be the 2D smoothing process or the 3D smoothing process. The smoothing processing unit 612 supplies the geometry image subjected to the smoothing process to the image generation unit 419.

The image generation unit 419 updates a texture 4542 using the geometry image to generate a texture image corresponding to the geometry image.

With such a configuration, the encoding device 400 can generate the smoothing information and provide the smoothing information to the decoding device. The decoding device can execute the smoothing process on the basis of the smoothing information. Therefore, the encoding device can control the smoothing process performed by the decoding device.

### <Flow of Encoding Process>

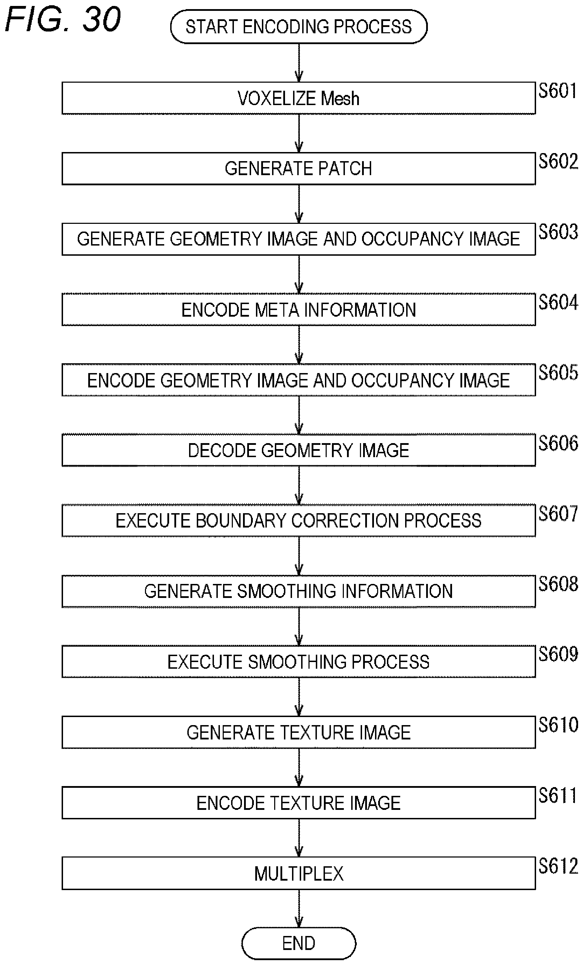

An example of the flow of the encoding process executed by the encoding device 400 will be described with reference to the flowchart in Fig. 30.

In this case, when the encoding process is started, the respective processes of steps S601 to S607 are executed similarly to the respective processes of steps S401 to S407 of Fig. 24.

In step S608, the smoothing information generation unit 611 applies Method 1-3 to generate the smoothing information. At that time, the smoothing information generation unit 611 can apply Methods 1-3-1 to 1-3-3.

In step S609, the smoothing processing unit 612 applies Method 1-3 and executes the smoothing process on the basis of the smoothing information generated in step S608.

The respective processes of steps S610 to S612 are executed similarly to the respective processes of steps S409 to S411 of Fig. 24. However, in step S610, the image generation unit 419 updates the texture 454 using the geometry image subjected to the smoothing process to generate a texture image. Furthermore, in step S612, the multiplexing unit 421 multiplexes the smoothing information generated in step S608 with other data, and stores the smoothing information in the bitstream.

When the process of step S612 ends, the encoding process ends.

By executing each process in this manner, the encoding device 400 can generate the smoothing information and provide the smoothing information to the decoding device. The decoding device can execute the smoothing process on the basis of the smoothing information. Therefore, the encoding device can control the smoothing process performed by the decoding device.

### <Encoding Device>

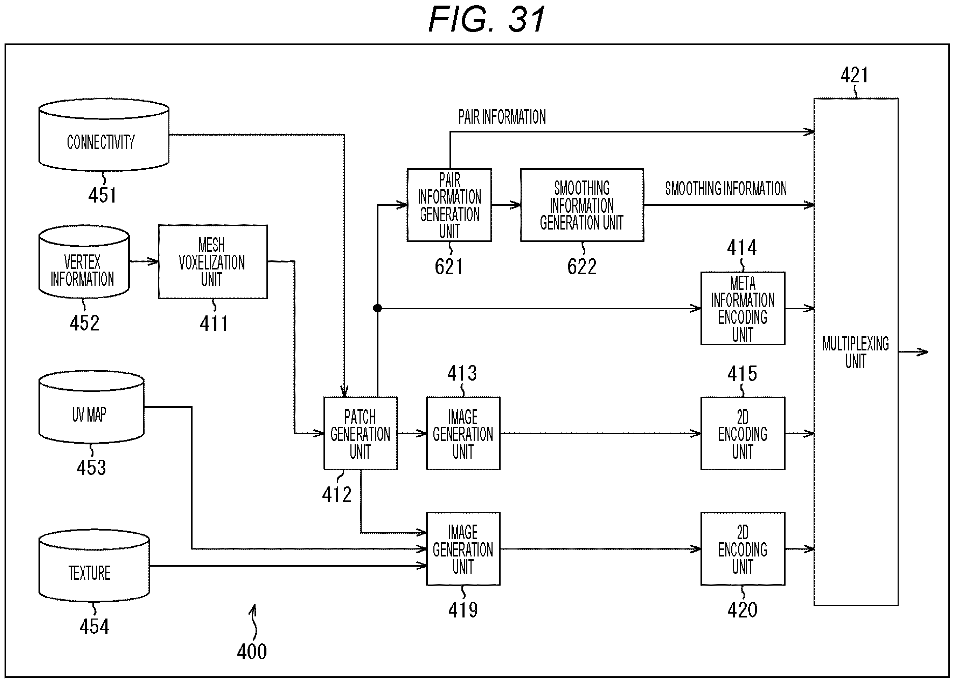

In the above description, the encoding device 400 decodes the encoded data of the geometry image and performs the smoothing process using the obtained geometry image. However, the encoding device 400 is not limited to this example. For example, the encoding device 400 may generate the geometry information without decoding the encoded data of the geometry image. Fig. 31 is a block diagram illustrating an example of a configuration of an encoding device that is an aspect of the information processing device in this case.

Note that, in Fig. 31, main processing units, data flows, and the like are illustrated, and those illustrated in Fig. 31 are not necessarily all. That is, in the encoding device 400, there may be a processing unit not illustrated as a block in Fig. 31, or there may be a process or a data flow not illustrated as an arrow or the like in Fig. 31.

As illustrated in Fig. 31, in this case, the 2D decoding unit 416, the boundary correction processing unit 417, the smoothing information generation unit 611, and the smoothing processing unit 612 of the configuration of the example of Fig. 29 are omitted. Further, instead of these units, the encoding device 400 includes a pair information generation unit 621 and a smoothing information generation unit 622.

In this case, the patch generation unit 412 also supplies information such as the connectivity 451 and vertex information to the pair information generation unit 621.

The pair information generation unit 621 acquires the information such as the connectivity 451 and vertex information supplied from the patch generation unit 412, and generates pair information for the pairing process on the basis of the information. That is, the pair information can also be said to be boundary correction information regarding the boundary correction process. The pair information generation unit 621 supplies the generated pair information to the multiplexing unit 421. The multiplexing unit 421 stores the pair information in the bitstream by multiplexing the pair information with other data. Furthermore, the pair information generation unit 621 supplies the generated pair information and information such as the connectivity 451 and vertex information to the smoothing information generation unit 622.

The smoothing information generation unit 622 generates the smoothing information on the basis of the information supplied from the pair information generation unit 621. The smoothing information generation unit 622 supplies the generated smoothing information to the multiplexing unit 421. The multiplexing unit 421 multiplexes the smoothing information with other encoded data or the like to generate a bitstream. This bitstream is provided to, for example, a decoding device. Therefore, the multiplexing unit 421 can be said to be a provision unit that provides the smoothing information.

With such a configuration, the encoding device 400 can generate the smoothing information and provide the smoothing information to the decoding device. The decoding device can execute the smoothing process on the basis of the smoothing information. Therefore, the encoding device can control the smoothing process performed by the decoding device.

### <Flow of Encoding Process>

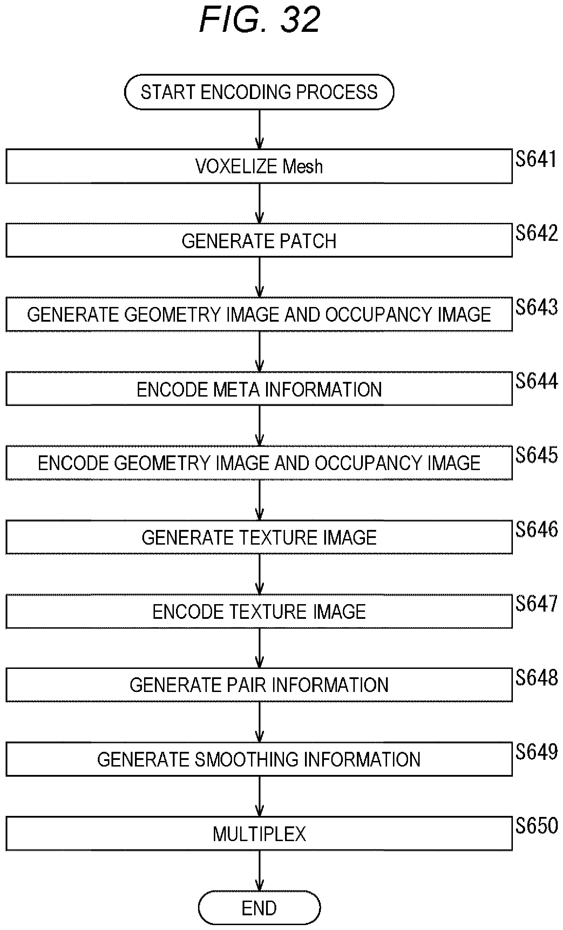

An example of the flow of the encoding process executed by the encoding device 400 in this case will be described with reference to the flowchart in Fig. 32.

In this case, when the encoding process is started, the respective processes of steps S641 to S645 are executed similarly to the respective processes of steps S601 to S605 of Fig. 24.

In step S646, the image generation unit 419 updates the texture 454 on the basis of the patch or the like of the geometry generated in step S642 to generate a texture image. In step S647, the 2D encoding unit 420 encodes the texture image to generate the encoded data of the texture image.

In step S648, the pair information generation unit 621 generates pair information.

In step S649, the smoothing information generation unit 622 applies Method 1-3 to generate the smoothing information. At that time, the smoothing information generation unit 622 can apply Methods 1-3-1 to 1-3-3.

In step S650, the multiplexing unit 421 multiplexes the smoothing information generated in step S649 with other data, and stores the smoothing information in the bitstream.

When the process of step S650 ends, the encoding process ends.

By executing each process in this manner, the encoding device 400 can generate the smoothing information and provide the smoothing information to the decoding device. The decoding device can execute the smoothing process on the basis of the smoothing information. Therefore, the encoding device can control the smoothing process performed by the decoding device.

### <Decoding Device>

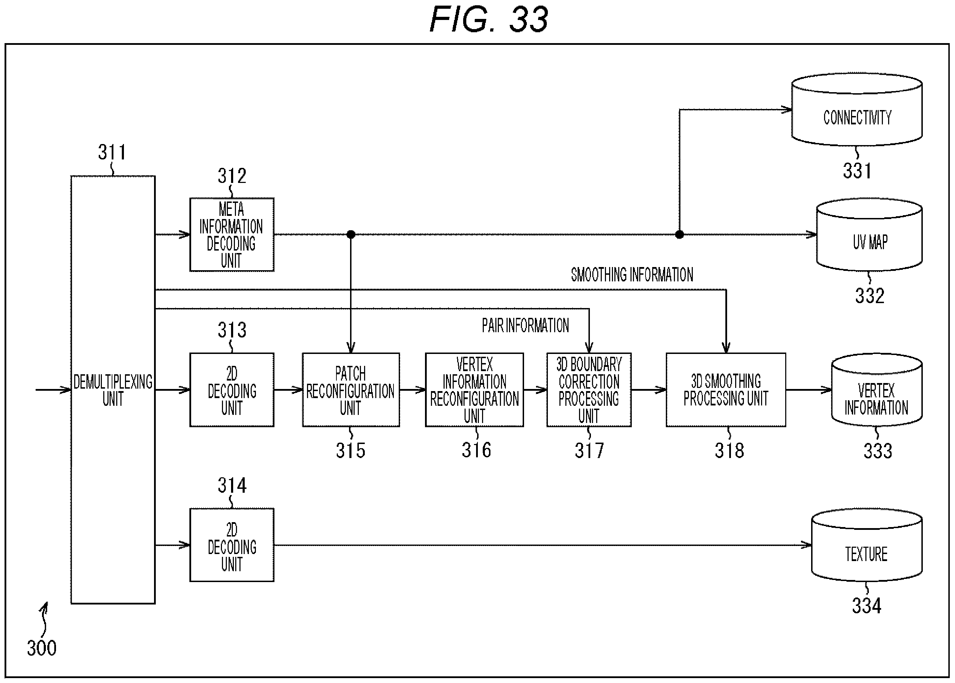

Fig. 33 is a block diagram illustrating a main configuration example of the decoding device 300 in this case. Fig. 33 illustrates a main configuration example of the decoding device (i.e., an example corresponding to the example of Fig. 18) that executes the 3D smoothing process.

Note that, in Fig. 33, main processing units, data flows, and the like are illustrated, and those illustrated in Fig. 33 are not necessarily all. That is, in the decoding device 300, there may be a processing unit not illustrated as a block in Fig. 33, or there may be a process or a data flow not illustrated as an arrow or the like in Fig. 33.

In this case, the decoding device 300 has a configuration similar to the example of Fig. 18. However, in this case, the demultiplexing unit 311 demultiplexes the bitstream and acquires the smoothing information included in the bitstream. That is, the demultiplexing unit 311 can also be said to be an acquisition unit that acquires the transmitted smoothing information. The demultiplexing unit 311 supplies the smoothing information to the 3D smoothing processing unit 318.

In this case, the 3D smoothing processing unit 318 acquires the smoothing information supplied from the demultiplexing unit 311. Then, the 3D smoothing processing unit 318 applies Method 1-3 and executes the 3D smoothing process on the basis of the smoothing information. At that time, the 3D smoothing processing unit 318 may also apply Methods 1-3-1 to 1-3-3. The 3D smoothing processing unit 318 outputs vertex information 333 after the 3D smoothing process to the outside of the decoding device 300 as (data constituting) 3D data using the restored mesh.

With such a configuration, the decoding device 300 can execute the 3D smoothing process on the basis of the smoothing information. That is, the decoding device 300 can execute the 3D smoothing process according to the control of the encoding device. Then, in this case as well, the decoding device 300 can bring the shape of the object after reconfiguration close to the shape of the object before encoding, and can mitigate a reduction in the subjective quality of the 3D data.

### <Flow of Decoding Process>

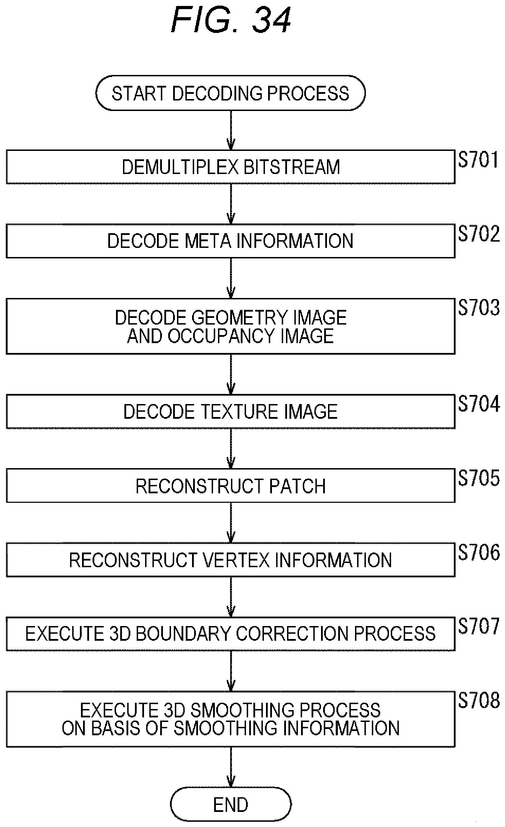

An example of the flow of the decoding process executed by the decoding device 300 in this case will be described with reference to the flowchart in Fig. 34.

When the decoding process is started, the respective processes of steps S701 to S707 are executed similarly to the respective processes of steps S301 to S307 in Fig. 19. However, in this case, in step S701, the demultiplexing unit 311 extracts (acquires) the smoothing information included in the bitstream by demultiplexing the bitstream.

In step S708, the 3D smoothing processing unit 318 applies Method 1-3 described above, executes the 3D smoothing process on the basis of the smoothing information obtained in step S701, and corrects the three-dimensional coordinates of the correction target point corresponding to the reference point. At that time, the 3D smoothing processing unit 318 may also apply Methods 1-3-1 to 1-3-3.

When the process of step S708 ends, the decoding process ends.

By executing each process, the decoding device 300 can execute the 3D smoothing process on the basis of the smoothing information. That is, the decoding device 300 can execute the 3D smoothing process according to the control of the encoding device. Then, in this case as well, the decoding device 300 can bring the shape of the object after reconfiguration close to the shape of the object before encoding, and can mitigate a reduction in the subjective quality of the 3D data.

### <Decoding Device>

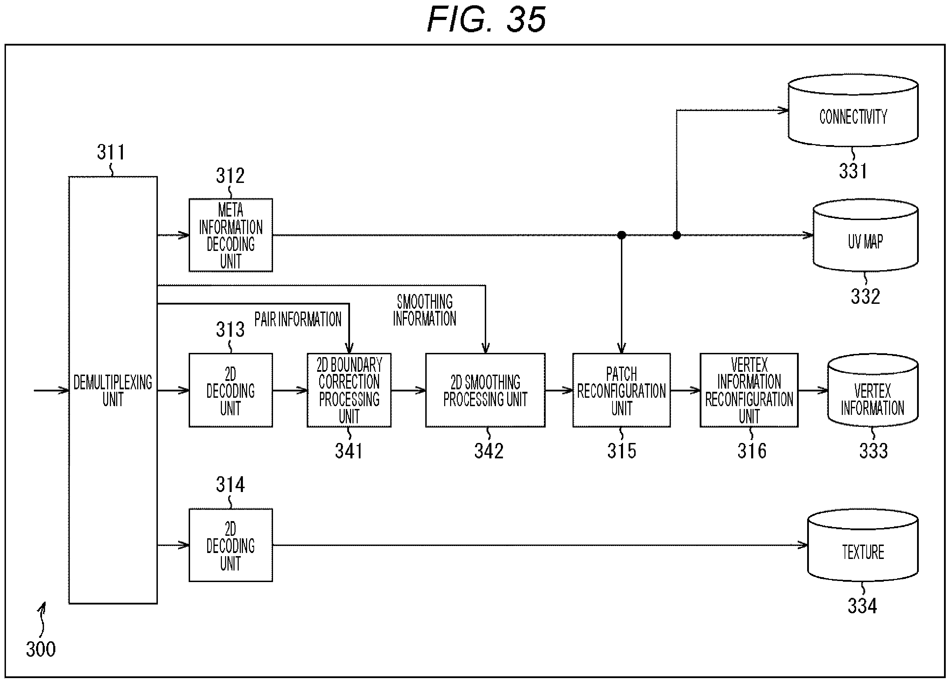

In the case of Method 1-3 as well, the 2D smoothing process may be applied as described above. Fig. 35 is a block diagram illustrating a main configuration example of the decoding device 300 in that case.

Note that, in Fig. 35, main processing units, data flows, and the like are illustrated, and those illustrated in Fig. 35 are not necessarily all. That is, in the decoding device 300, there may be a processing unit not illustrated as a block in Fig. 35, or there may be a process or a data flow not illustrated as an arrow or the like in Fig. 35.

In this case, the decoding device 300 has a configuration similar to the example of Fig. 20. However, in this case, the demultiplexing unit 311 demultiplexes the bitstream and acquires the smoothing information included in the bitstream. That is, the demultiplexing unit 311 can also be said to be an acquisition unit that acquires the transmitted smoothing information. The demultiplexing unit 311 supplies the smoothing information to the 2D smoothing processing unit 342.

In this case, the 2D smoothing processing unit 342 acquires the smoothing information supplied from the demultiplexing unit 311. Then, the 2D smoothing processing unit 342 applies Method 1-3 and executes the 2D smoothing process on the basis of the smoothing information. At that time, the 2D smoothing processing unit 342 may also apply Methods 1-3-1 to 1-3-3. The 2D smoothing processing unit 342 supplies the geometry image after the 2D smoothing process to the patch reconfiguration unit 315.

With such a configuration, the decoding device 300 can execute the 2D smoothing process on the basis of the smoothing information. That is, the decoding device 300 can execute the 2D smoothing process according to the control of the encoding device. Then, in this case as well, the decoding device 300 can bring the shape of the object after reconfiguration close to the shape of the object before encoding, and can mitigate a reduction in the subjective quality of the 3D data.

### <Flow of Decoding Process>

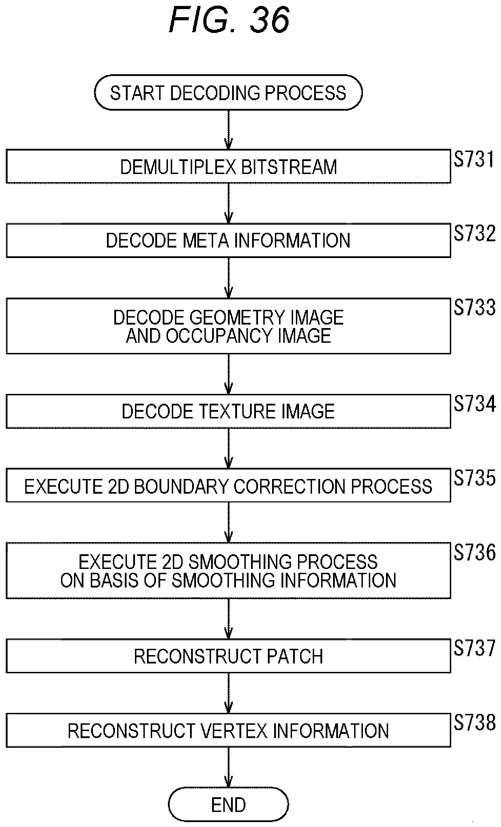

An example of the flow of the decoding process executed by the decoding device 300 in this case will be described with reference to the flowchart in Fig. 36.

When the decoding process is started, the respective processes of steps S731 to S735 are executed similarly to the respective processes of steps S331 to S335 in Fig. 21. However, in this case, in step S731, the demultiplexing unit 311 extracts (acquires) the smoothing information included in the bitstream by demultiplexing the bitstream.

In step S736, the 2D smoothing processing unit 342 applies Method 1-3 described above, executes the 2D smoothing process on the basis of the smoothing information obtained in step S731, and corrects the pixel value (depth value) of the correction target point corresponding to the reference point in the geometry image. At that time, the 2D smoothing processing unit 342 may also apply Methods 1-3-1 to 1-3-3.

The respective processes of steps S737 and S738 are performed similarly to the respective processes of steps S337 and S338 of Fig. 21.

When the process of step S738 ends, the decoding process ends.

By executing each process in this manner, the decoding device 300 can execute the 2D smoothing process on the basis of the smoothing information. That is, the decoding device 300 can execute the 2D smoothing process according to the control of the encoding device. Then, in this case as well, the decoding device 300 can bring the shape of the object after reconfiguration close to the shape of the object before encoding, and can mitigate a reduction in the subjective quality of the 3D data.

### <6. Appendix>

In the above description, the case where 3D data using a mesh is encoded by extending the standard called VPCC has been described, but visual volumetric video-based coding (V3C) or metadata immersive video (MIV) may be applied instead of VPCC. V3C and MIV are standards using substantially similar encoding technique as VPCC, and can be extended similarly to the case of VPCC to encode 3D data using a mesh. Therefore, the present technology described above can also be applied to a case where V3C or MIV is applied to the encoding of 3D data using a mesh.

### <3D Data>

Although the case where the present technology is applied to mesh encoding/decoding has been described above, the present technology is not limited to these examples, and can be applied to encoding/decoding of 3D data of an arbitrary standard. That is, as long as there is no contradiction with the present technology described above, any specifications can be used for various processes such as an encoding/decoding method and various types of data such as 3D data and metadata. Furthermore, as long as there is no contradiction with the present technology, some processes and specifications described above may be omitted.

### <Computer>

The series of processes described above can be executed by hardware or software. When the series of processes is executed by software, a program forming the software is installed in a computer. Here, examples of the computer include a computer built in dedicated hardware, a general-purpose personal computer that can execute various functions by being installed with various programs and the like, for example.

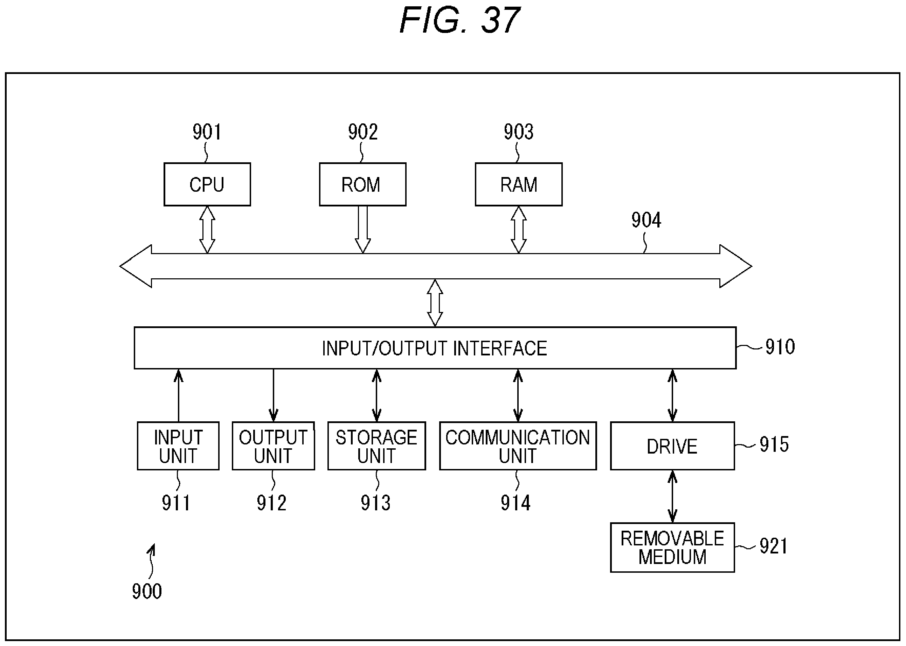

Fig. 37 is a block diagram illustrating a configuration example of hardware of a computer that executes the series of processes described above by a program.

In a computer 900 illustrated in Fig. 37, a central processing unit (CPU) 901, a read-only memory (ROM) 902, and a random-access memory (RAM) 903 are mutually connected via a bus 904.

Furthermore, an input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes, for example, a network interface. The drive 915 drives a removable medium 921 such as a magnetic disk, an optical disk, a magneto-optical disk, or a semiconductor memory.

In the computer configured as above, the series of processes described above is performed, for example, by the CPU 901 loading a program stored in the storage unit 913 into the RAM 903 via the input/output interface 910 and the bus 904, and executing the program. Furthermore, the RAM 903 also appropriately stores data and the like required for the CPU 901 to execute various processes.

The program executed by the computer can be applied by being recorded on, for example, the removable medium 921 as a package medium or the like. In this case, the program can be installed in the storage unit 913 via the input/output interface 910 by attaching the removable medium 921 to the drive 915.

Furthermore, the program can also be provided via a wired or wireless transmission medium such as a local area network, the Internet, or digital satellite broadcasting. In this case, the program can be received by the communication unit 914 and installed in the storage unit 913.

Besides, the program can be installed in advance in the ROM 902 and the storage unit 913.

### <Applicable Target of Present Technology>

The present technology may be applied to any configuration. For example, the present technology may be applied to various electronic devices.

Furthermore, for example, the present technology can also be implemented as a partial configuration of a device, such as a processor (e.g., video processor) as a system large-scale integration (LSI) and the like, a module (e.g., video module) using a plurality of the processors and the like, a unit (e.g., video unit) using a plurality of the modules and the like, or a set (e.g., video set) obtained by further adding other functions to the unit.

Furthermore, for example, the present technology can also be applied to a network system including a plurality of devices. For example, the present technology may be implemented as cloud computing in which a plurality of devices shares and processes in cooperation via a network. For example, the present technology may be implemented in a cloud service that provides a service regarding an image (moving image) to any terminal such as a computer, an audiovisual (AV) device, a portable information processing terminal, or an Internet of things (IoT) device.

Note that, in the present specification, a system means a set of a plurality of components (devices, modules (parts), etc.), and it does not matter whether or not all the components are in the same housing. Therefore, a plurality of devices housed in different housings and connected via a network, and one device in which a plurality of modules is housed in one housing are both systems.

### <Field and Use to Which Present Technology is Applicable>

The system, device, processing unit and the like to which the present technology is applied can be used in any field such as traffic, medical care, crime prevention, agriculture, livestock industry, mining, beauty care, factory, household appliance, weather, and natural surveillance, for example. Furthermore, the present technology can be applied for any use.

### <Others>

Note that, in the present specification, a "flag" is information for identifying a plurality of states, and includes not only information used for identifying two states of true (1) or false (0), but also information that can identify three or more states. Therefore, a value that may be taken by the "flag" may be, for example, a binary of 1/0 or a ternary or more. That is, the number of bits forming this "flag" is any number, and may be one bit or a plurality of bits. Furthermore, identification information (including the flag) is assumed to include not only identification information thereof in a bitstream but also difference information of the identification information relative to certain reference information in the bitstream, and thus, in the present specification, the "flag" and "identification information" include not only the information thereof but also the difference information relative to the reference information.

Furthermore, various types of information (such as metadata) related to encoded data (bitstream) may be transmitted or recorded in any form as long as this is associated with the encoded data. Here, the term "associate" means, for example, that one data can be used (linked) when the other data is processed. That is, the data associated with each other may be collected as one data or may be made individual data. For example, information associated with the encoded data (image) may be transmitted on a transmission path different from that of the encoded data (image). In addition, for example, the information associated with the encoded data (image) may be recorded in a recording medium different from that of the encoded data (image) (or another recording area of the same recording medium). Note that, this "association" may be not the entire data but a part of data. For example, an image and information corresponding to the image may be associated with each other in any unit such as a plurality of frames, one frame, or a part within a frame.

Note that, in the present specification, terms such as "synthesize", "multiplex", "add", "integrate", "include", "store", "put in", "introduce", "insert" and the like mean, for example, to combine a plurality of objects into one, such as to combine encoded data and metadata into one data, and mean one method of "associating" described above.

Furthermore, the embodiments of the present technology are not limited to the embodiment described above, and various modifications are possible without departing from the scope of the present technology.

For example, the configuration described as one device (or processing unit) may be divided to form a plurality of devices (or processing units). Conversely, the configurations described above as a plurality of devices (or processing units) may be collectively configured as one device (or processing unit). Furthermore, it goes without saying that a configuration other than the configurations described above may be added to the configuration of each device (or each processing unit). Moreover, when the configuration and operation as the entire system are substantially the same, a part of the configuration of a certain device (or processing unit) may be included in the configuration of another device (or another processing unit).

In addition, for example, the program described above may be executed in any device. In this case, the device is only required to have a necessary function (functional block, etc.) and obtain necessary information.

In addition, for example, each step of one flowchart may be executed by one device, or may be shared and executed by a plurality of devices. Moreover, when a plurality of processes is included in one step, the plurality of processes may be executed by one device, or may be shared and executed by a plurality of devices. In other words, a plurality of processes included in one step can also be executed as processes of a plurality of steps. Conversely, the processes described as a plurality of steps can also be collectively executed as one step.

Furthermore, for example, in a program executed by the computer, the processes of steps describing the program may be executed in time series in the order described in the present specification, or may be executed in parallel or individually at a required timing such as when a call is made. That is, as long as there is no contradiction, the processes of the respective steps may be executed in an order different from the order described above. Moreover, the processes of the steps describing the program may be executed in parallel with processes of another program, or may be executed in combination with processes of the other program.

Furthermore, for example, a plurality of technologies regarding the present technology can be implemented independently as a single entity as long as there is no contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the present technologies described above can be implemented together with another technology that is not described above.

Note that the present technology may also have the following configurations.
(1) An information processing device including:
   a decoding unit that decodes a bitstream obtained by dividing a mesh that represents an object with a three-dimensional structure into at least a first patch and a second patch, placing the first patch and the second patch within a single image, and encoding the single image;
   a boundary correction unit that executes a boundary correction process to correct a geometry for a boundary vertex located at a boundary of the patches decoded; and
   a smoothing unit that sets the boundary vertex subjected to the boundary correction process as a reference point and executes a smoothing process to smooth a geometry for a vertex within a partial area based on the reference point.
(2) The information processing device according to (1), in which
   the smoothing unit sets the reference point on the basis of geometry of the boundary vertex subjected to the boundary correction process.
(3) The information processing device according to (2), in which
   the smoothing unit sets a correction target point to be subjected to the smoothing process and a correction utilization point to be used in the smoothing process on the basis of the set reference point.
(4) The information processing device according to (3), in which
   the smoothing unit corrects three-dimensional coordinates of the correction target point as the smoothing process.
(5) The information processing device according to (3), in which
   the boundary correction unit corrects two-dimensional coordinates of the boundary vertex as the boundary correction process, and
   the smoothing unit corrects two-dimensional coordinates of the correction target point as the smoothing process.
(6) The information processing device according to any one of (1) to (5), further including a position correction unit that executes, on the basis of position correction coordinate information including information regarding a position correction target point to be corrected and a geometry after correction, a position correction process to correct a geometry of the position correction target point, in which
   the smoothing unit sets the reference point on the basis of the position correction coordinate information.
(7) The information processing device according to (6), in which
   the smoothing unit sets the boundary vertex subjected to the boundary correction process and the position correction process as the reference point.
(8) The information processing device according to (6) or (7), in which
   the smoothing unit sets an in-patch vertex, located inside the patch and subjected to the position correction process, as the reference point.
(9) The information processing device according to any one of (1) to (8), further including an acquisition unit that acquires smoothing information including transmitted information regarding the smoothing, in which
   the smoothing unit executes the smoothing process on the basis of the smoothing information acquired.
(10) The information processing device according to (9), in which
   the smoothing unit sets the reference point by a method indicated by the smoothing information.
(11) The information processing device according to (9) or (10), in which
   the smoothing unit sets a correction target point to be subjected to the smoothing process and a correction utilization point to be used in the smoothing process on the basis of the smoothing information.
(12) The information processing device according to any one of (9) to (11), in which
   the smoothing unit corrects a geometry of a correction target point to be subjected to the smoothing process by a method indicated by the smoothing information.
(13) An information processing method including:
   decoding a bitstream obtained by dividing a mesh that represents an object with a three-dimensional structure into at least a first patch and a second patch, placing the first patch and the second patch within a single image, and encoding the single image;
   executing a boundary correction process to correct a geometry for a boundary vertex located at a boundary of the patches decoded; and
   setting the boundary vertex subjected to the boundary correction process as a reference point and executing a smoothing process to smooth a geometry for a vertex within a partial area based on the reference point.
(14) An information processing device including:
   a smoothing information generation unit that uses a boundary vertex subjected to a boundary correction process as a reference point to generate smoothing information including information regarding a smoothing process to smooth a geometry of a vertex within a partial area based on the reference point; and
   a provision unit that provides the smoothing information, in which
   the boundary vertex is a vertex located at a boundary of a patch corresponding to a part of a mesh that represents an object with a three-dimensional structure, and
   the boundary correction process is a process of correcting a geometry of the boundary vertex.
(15) The information processing device according to (14), in which
   the smoothing information includes information for specifying a vertex to be used as the reference point.
(16) The information processing device according to (14) or (15), in which
   the smoothing information includes information for specifying a vertex serving as a correction target point to be subjected to the smoothing process and a vertex serving as a correction utilization point to be used in the smoothing process.
(17) The information processing device according to any one of (14) to (16), in which
   the smoothing information includes information indicating a method of correcting a geometry of a correction target point to be subjected to the smoothing process.
(18) The information processing device according to any one of (14) to (17), further including a boundary correction unit that executes the boundary correction process, in which
   the smoothing information generation unit generates the smoothing information on the basis of the geometry of the boundary vertex subjected to the boundary correction process by the boundary correction unit.
(19) The information processing device according to any one of (14) to (17), further including a boundary correction information generation unit that generates boundary correction information regarding the boundary correction process, in which
   the smoothing information generation unit generates the smoothing information on the basis of the boundary correction information.
(20) An information processing method including:
   setting a boundary vertex subjected to a boundary correction process as a reference point, and generating smoothing information including information regarding a smoothing process to smooth a geometry of a vertex within a partial area based on the reference point; and
   providing the smoothing information, in which
   the boundary vertex is a vertex located at a boundary of a patch corresponding to a part of a mesh that represents an object with a three-dimensional structure, and
   the boundary correction process is a process of correcting a geometry of the boundary vertex.

### REFERENCE SIGNS LIST

- 300: Decoding device
- 311: Demultiplexing unit
- 312: Meta information decoding unit
- 313, 314: 2D decoding unit
- 315: Patch reconfiguration unit
- 316: Vertex information reconfiguration unit
- 317: 3D boundary correction processing unit
- 318: 3D smoothing processing unit
- 341: 2D boundary correction processing unit
- 342: 2D smoothing processing unit
- 400: Encoding device
- 411: Mesh voxelization unit
- 412: Patch generation unit
- 413: Image generation unit
- 414: Meta information encoding unit
- 415: 2D encoding unit
- 416: 2D decoding unit
- 417: Boundary correction processing unit
- 418: Position correction coordinate information generator
- 419: Image generation unit
- 420: 2D encoding unit
- 421: Multiplexing unit
- 511: 3D position correction unit
- 521: 2D position correction unit
- 611: Smoothing information generation unit
- 612: Smoothing processing unit
- 621: Pair information generation unit
- 622: Smoothing information generation unit
- 900: Computer

## Claims

1. An information processing device comprising:
a decoding unit that decodes a bitstream obtained by dividing a mesh that represents an object with a three-dimensional structure into at least a first patch and a second patch, placing the first patch and the second patch within a single image, and encoding the single image;
a boundary correction unit that executes a boundary correction process to correct a geometry for a boundary vertex located at a boundary of the patches decoded; and
a smoothing unit that sets the boundary vertex subjected to the boundary correction process as a reference point and executes a smoothing process to smooth a geometry for a vertex within a partial area based on the reference point.

2. The information processing device according to claim 1, wherein
the smoothing unit sets the reference point on a basis of geometry of the boundary vertex subjected to the boundary correction process.

3. The information processing device according to claim 2, wherein
the smoothing unit sets a correction target point to be subjected to the smoothing process and a correction utilization point to be used in the smoothing process on a basis of the set reference point.

4. The information processing device according to claim 3, wherein
the smoothing unit corrects three-dimensional coordinates of the correction target point as the smoothing process.

5. The information processing device according to claim 3, wherein
the boundary correction unit corrects two-dimensional coordinates of the boundary vertex as the boundary correction process, and
the smoothing unit corrects two-dimensional coordinates of the correction target point as the smoothing process.

6. The information processing device according to claim 1, further comprising a position correction unit that executes, on a basis of position correction coordinate information including information regarding a position correction target point to be corrected and a geometry after correction, a position correction process to correct a geometry of the position correction target point, wherein
the smoothing unit sets the reference point on a basis of the position correction coordinate information.

7. The information processing device according to claim 6, wherein
the smoothing unit sets the boundary vertex subjected to the boundary correction process and the position correction process as the reference point.

8. The information processing device according to claim 6, wherein
the smoothing unit sets an in-patch vertex, located inside the patch and subjected to the position correction process, as the reference point.

9. The information processing device according to claim 1, further comprising an acquisition unit that acquires smoothing information including transmitted information regarding the smoothing, wherein
the smoothing unit executes the smoothing process on a basis of the smoothing information acquired.

10. The information processing device according to claim 9, wherein
the smoothing unit sets the reference point by a method indicated by the smoothing information.

11. The information processing device according to claim 9, wherein
the smoothing unit sets a correction target point to be subjected to the smoothing process and a correction utilization point to be used in the smoothing process on a basis of the smoothing information.

12. The information processing device according to claim 9, wherein
the smoothing unit corrects a geometry of a correction target point to be subjected to the smoothing process by a method indicated by the smoothing information.

13. An information processing method comprising:
decoding a bitstream obtained by dividing a mesh that represents an object with a three-dimensional structure into at least a first patch and a second patch, placing the first patch and the second patch within a single image, and encoding the single image;
executing a boundary correction process to correct a geometry for a boundary vertex located at a boundary of the patches decoded; and
setting the boundary vertex subjected to the boundary correction process as a reference point and executing a smoothing process to smooth a geometry for a vertex within a partial area based on the reference point.

14. An information processing device comprising:
a smoothing information generation unit that uses a boundary vertex subjected to a boundary correction process as a reference point to generate smoothing information including information regarding a smoothing process to smooth a geometry of a vertex within a partial area based on the reference point; and
a provision unit that provides the smoothing information, wherein
the boundary vertex is a vertex located at a boundary of a patch corresponding to a part of a mesh that represents an object with a three-dimensional structure, and
the boundary correction process is a process of correcting a geometry of the boundary vertex.

15. The information processing device according to claim 14, wherein
the smoothing information includes information for specifying a vertex to be used as the reference point.

16. The information processing device according to claim 14, wherein
the smoothing information includes information for specifying a vertex serving as a correction target point to be subjected to the smoothing process and a vertex serving as a correction utilization point to be used in the smoothing process.

17. The information processing device according to claim 14, wherein
the smoothing information includes information indicating a method of correcting a geometry of a correction target point to be subjected to the smoothing process.

18. The information processing device according to claim 14, further comprising a boundary correction unit that executes the boundary correction process, wherein
the smoothing information generation unit generates the smoothing information on a basis of the geometry of the boundary vertex subjected to the boundary correction process by the boundary correction unit.

19. The information processing device according to claim 14, further comprising a boundary correction information generation unit that generates boundary correction information regarding the boundary correction process, wherein
the smoothing information generation unit generates the smoothing information on a basis of the boundary correction information.

20. An information processing method comprising:
setting a boundary vertex subjected to a boundary correction process as a reference point, and generating smoothing information including information regarding a smoothing process to smooth a geometry of a vertex within a partial area based on the reference point; and
providing the smoothing information, wherein
the boundary vertex is a vertex located at a boundary of a patch corresponding to a part of a mesh that represents an object with a three-dimensional structure, and
the boundary correction process is a process of correcting a geometry of the boundary vertex.
